(19) Europäisches Patentamt
European Patent Office
Office européen des brevets

(11) **EP 4 208 941 B1**

(12) **EUROPÄISCHE PATENTSCHRIFT**

(45) Veröffentlichungstag und Bekanntmachung des Hinweises auf die Patenterteilung:
**13.11.2024 Patentblatt 2024/46**

(21) Anmeldenummer: **21769142.7**

(22) Anmeldetag: **30.08.2021**

(51) Internationale Patentklassifikation (IPC):
*H02P 6/00* (2016.01)      *H02P 25/06* (2016.01)
*H02P 6/34* (2016.01)      *G05B 13/04* (2006.01)
*H02P 21/00* (2016.01)

(52) Gemeinsame Patentklassifikation (CPC):
**H02P 6/006; G05B 13/042; H02P 6/34; H02P 21/0017; H02P 25/06**

(86) Internationale Anmeldenummer:
**PCT/EP2021/073871**

(87) Internationale Veröffentlichungsnummer:
**WO 2022/049026 (10.03.2022 Gazette 2022/10)**

(54) **VERFAHREN ZUM BETREIBEN EINES LINEARMOTORS, SOWIE LINEARMOTOR**

METHOD FOR OPERATING A LINEAR MOTOR, AND LINEAR MOTOR

PROCÉDÉ DE FONCTIONNEMENT D'UN MOTEUR LINÉAIRE, ET MOTEUR LINÉAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2020 AT 507492020**

(43) Veröffentlichungstag der Anmeldung:
**12.07.2023 Patentblatt 2023/28**

(73) Patentinhaber: **B&R Industrial Automation GmbH 5142 Eggelsberg (AT)**

(72) Erfinder:
• **KRÄMER, Christian**
  **5142 Eggelsberg (AT)**
• **KEMMETMÜLLER, Wolfgang**
  **5142 Eggelsberg (AT)**
• **KUGI, Andreas**
  **5142 Eggelsberg (AT)**
• **WEBER, Andreas**
  **5142 Eggelsberg (AT)**
• **PLAINER, Manuel**
  **5142 Eggelsberg (AT)**
• **REINTHALER, Michael**
  **5142 Eggelsberg (AT)**
• **GRÜNBACHER, Engelbert**
  **5142 Eggelsberg (AT)**

(74) Vertreter: **Patentanwälte Pinter & Weiss OG Prinz-Eugen-Straße 70 1040 Wien (AT)**

(56) Entgegenhaltungen:
**EP-A1- 3 037 903      US-A1- 2008 215 164 US-B1- 8 344 669**

**Beschreibung**

Die gegenständliche Erfindung betrifft ein Verfahren zum Betreiben eines Linearmotors mit einem Stator, an dem eine Mehrzahl von Antriebsspulen angeordnet sind, und mit einer entlang dem Stator bewegten Transporteinheit, an der eine Mehrzahl von Antriebsmagnete angeordnet sind, wobei durch das Bestromen von aktiven Antriebsspulen im Bereich der Antriebsmagnete der Transporteinheit ein elektromagnetisches Feld erzeugt wird, das zum Bewegen der Transporteinheit mit den Antriebsmagneten der Transporteinheit zusammenwirkt, wobei ein Gütefunktional als Funktion von Stellgrößen der aktiven Antriebsspulen verwendet wird, wobei das Gütefunktional eine Summe einer Anzahl von mit Gewichtungsfaktoren gewichteten Gütetermen, die von den Stellgrößen abhängig sind, enthält, dass wobei das Gütefunktional einen Güteterm enthält, der eine Abweichung einer vorgegebenen Bewegungssollgröße der Regelung der Bewegung der Transporteinheit von einer von der Stellgröße abhängigen Istgröße der Regelung bewertet, dass wobei das Gütefunktional zur Regelung der Bewegung der Transporteinheit entlang des Stators hinsichtlich der Stellgrößen optimiert wird, um für den jeweiligen Zeitschritt der Regelung der Bewegung optimale Stellgrößen zu ermitteln und die aktiven Antriebsspulen gemäß den ermittelten optimalen Stellgrößen bestromt werden.

Bei einem Linearmotor ist ein Primärteil vorgesehen und ein Sekundärteil (Läufer), der relativ zum Primärteil bewegbar angeordnet ist. Am Primärteil sind Antriebsspulen angeordnet und am Sekundärteil Antriebsmagnete, oder umgekehrt. Die Antriebsmagnete sind entweder als Permanentmagnete, elektrische Spulen oder Kurzschlusswicklungen ausgeführt. Die Antriebsspulen sind elektrische Spulen, die zur Erzeugung eines elektromagnetischen Feldes bestromt werden. Durch das Zusammenwirken der (elektro)magnetischen Felder der Antriebsmagnete und der Antriebsspulen wirken Kräfte auf den Sekundärteil, die den Sekundärteil relativ zum Primärteil bewegen. Der Linearmotor kann beispielsweise als Synchronmaschine oder als Asynchronmaschine ausgeführt sein. Der Linearmotor kann auch als planarer Linearmotor (auch Planarmotor genannt) ausgeführt sein. Die Antriebsspulen des Linearmotors sind entweder entlang einer Bewegungsrichtung angeordnet oder beim Planarmotor entlang von zwei Bewegungsrichtungen, also in einer Bewegungsebene. Der Sekundärteil kann entlang dieser einen Bewegungsrichtung bewegt werden oder frei in der Bewegungsebene in den zwei Bewegungsrichtungen. Man kann auch zwischen Kurzstatorlinearmotoren und Langstatorlinearmotoren unterscheiden, wobei beim Langstatorlinearmotor der Sekundärteil kürzer als der Primärteil ist und beim Kurzstatorlinearmotor der Primärteil kürzer als der Sekundärteil ist. Beim Planarmotor ist der Primärteil üblicherweise größer als der Sekundärteil.

Linearmotoren werden in elektromagnetischen Transportsystemen eingesetzt, bei denen eine Transporteinheit zur Durchführung einer Transportaufgabe bewegt wird. Die Transporteinheit kann als Sekundärteil oder Primärteil ausgeführt sein. Üblicherweise wird ein solches elektromagnetisches Transportsystem in Form eines Langstatorlinearmotors oder Planarmotors ausgeführt.

Bei einem Langstatorlinearmotor sind entlang eines Stators eine Vielzahl von elektrischen Antriebsspulen nebeneinander ortsfest angeordnet. Auf einer Transporteinheit ist eine Anzahl von Antriebsmagneten, entweder als Permanentmagnete oder als elektrische Spule oder Kurzschlusswicklung, angeordnet, die durch einen Luftspalt von den Antriebsspulen getrennt sind und die mit den Antriebsspulen zusammenwirken. Durch das Zusammenwirken der (elektro)magnetischen Felder der Antriebsmagnete und der Antriebsspulen wirken Kräfte auf die Transporteinheit, die die Transporteinheit entlang des Stators bewegen. Bei einem Planarmotor sind die Antriebsspulen am Stator in einer Ebene angeordnet. Ebenso gibt es an der Transporteinheit Antriebsmagnete, die in einer Ebene angeordnet sind.

Oftmals sind eine bestimmte Anzahl von Antriebsspulen auf einzelnen Statorsegmenten angeordnet. Die Statorsegmente können auch unterschiedliche Geometrien aufweisen, wie beispielsweise Geraden, Kurven, Weichen usw. Die Statorsegmente können dann zum gewünschten Stator zusammengesetzt werden, indem diese aneinandergereiht werden. Für den erfindungsgemäßen Linearmotor ist aber die Verwendung von solchen Statorsegmenten und die Anzahl solcher Statorsegmente unerheblich und auch die Anzahl und Anordnung der Antriebsspulen auf einem Statorsegment.

Durch die Bestromung der Antriebsspulen im Bereich der Antriebsmagnete der Transporteinheit kann ein magnetisches Feld erzeugt werden, das mit dem magnetischen Feld der Antriebsmagnete zusammenwirkt, um eine auf die Transporteinheit wirkende Vortriebskraft (in Bewegungsrichtung entlang des Stators oder in Bewegungsrichtung in einer Bewegungsebene entlang des Stators bei einem Planarmotor) und/oder Normalkraft (in Richtung quer zur Bewegungsrichtung) zu erzeugen. Durch Ansteuerung der einzelnen Antriebsspulen, zur Regelung des erzeugten magnetischen Flusses, können die entstehenden Kräfte beeinflusst werden. Dadurch kann die Transporteinheit in gewünschter Weise entlang der Transportstrecke (was eine Transportebene im Falle eines Planarmotors umfasst) bewegt werden, indem durch Ansteuerung der Antriebsspulen ein in Bewegungsrichtung bewegtes magnetisches Feld erzeugt wird. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden, in der Regel durch Anlegen einer elektrischen Spannung.

Beispiele für Langstatorlinearmotoren können der WO 2013/143783 A1, der US 6,876,107 B2, der US 2013/0074724 A1 oder der WO 2004/103792 A1 entnommen werden. Die US 9,202,719 B2 offenbart beispielsweise den grundlegenden Aufbau und die Funktionsweise eines Planarmotors.

Zur Regelung der Bewegung einer Transporteinheit wird üblich - analog zu rotativen Motoren - ein mit der Transporteinheit mitbewegtes dq-Koordinatensystem verwendet. Im Falle eines Planarmotors auch getrennt in den zwei Bewegungsrichtungen. Es wird dann ein für die gewünschte Bewegung benötigter Antriebsstrom im dq-Koordinatensystem berechnet, mit einer Stromkomponente in Bewegungsrichtung (oftmals auch q-Komponente bezeichnet) und möglicherweise einer Stromkomponente in Normalrichtung (also quer zur Bewegungsrichtung, oftmals auch d-Komponente bezeichnet). Die q-Komponente ist dabei verantwortlich für die Erzeugung der Vortriebskraft und die d-Komponenten für die Erzeugung einer Normalkraft quer zur Vortriebskraft. Für eine normale Bewegung entlang des Stators wird aber in der Regel keine aktive Normalkraft (also durch Bestromen der Antriebsspulen) benötigt. Der Antriebsstrom im dq-Koordinatensystem wird dann, analog zum rotativen Motor, mit einer inversen Park-Transformation in die Spulenströme der an der Erzeugung der Kräfte beteiligten Antriebsspulen umgerechnet, die dann durch Anlegen einer entsprechenden Spannung an die Antriebsspulen mittels einer Leistungselektronik erzeugt werden. Das wird mit einem für die Regelung vorgegebenen Zeitschritt, typischerweise im 1/10 Millisekundenbereich, wiederholt. Aufgrund der Bewegung der Transporteinheit werden während der Bewegung auch verschiedene Antriebsspulen beteiligt sein. Diese Regelung ist unabhängig davon, ob Kräfte an beiden Seiten (in Bewegungsrichtung der Transporteinheit gesehen) der Transporteinheit erzeugt werden, oder nur an einer Seite.

Eine derartige Regelung auf Basis eines dq-Modells des Langstatorlinearmotors ist beispielsweise in Khong, P. C., et al., "Magnetic Guidance of the Mover in a Long-Primary Linear Motor", IEEE Transactions on Industry Applications, Vol.47, No.3, May/June 2011, S.1319-1327 beschrieben. In Khong wird ein Langstatorlinearmotor mit in Bewegungsrichtung gesehenen, beidseitig angeordneten Antriebsspulen beschrieben und die Normalkräfte an den beiden Seiten werden genutzt, um die Transporteinheit zur Führung in der Mitte zu zentrieren.

In der EP 3 385 110 A1 ist ein Langstatorlinearmotor beschrieben, bei dem die Vortriebskraft und die Normalkraft unabhängig voneinander geregelt werden, um die Normalkraft an die Gegebenheiten der Transportstrecke anpassen zu können. In der EP 3 109 998 B1 wird die Normalkraft oder ein Moment für die Steuerung der Bewegung der Transporteinheit in einer Weiche verwendet.

Zur Regelung der auf die Transporteinheit wirkenden Kräfte und/oder Momente wird ein Regler, oftmals auch eine Reglerkaskade aus mehreren aufeinanderfolgenden Reglern, verwendet, um eine Abweichung zwischen einer vorgegebenen Sollgröße, beispielsweise eine Sollposition oder Sollgeschwindigkeit, und einer Istgröße, beispielsweise eine Istposition oder Istgeschwindigkeit, auszugleichen. Oftmals sind entlang des Stators auch eine Vielzahl von Reglern vorgesehen, beispielsweise ein Regler pro Statorsegment (wie in EP 3 422 558 A1 beschrieben). Der Regler ermittelt dazu anhand eines implementierten Regelgesetzes, oftmals ein PI-Regler oder PID-Regler, eine Stellgröße, beispielsweise an die Antriebsspulen anzulegende elektrische Spannungen, die dann am Linearmotor umgesetzt wird. Beispielsweise wird die Stellgröße von einer Leistungselektronik für die Antriebsspulen umgesetzt, d.h. erzeugt und an die Antriebsspulen angelegt. Ein herkömmlicher Regler enthält Reglerparameter, die an die jeweilige Regelstrecke, hier Stator mit Antriebsspulen und Transporteinheit mit Antriebsmagneten und deren magnetische Kopplung, angepasst werden müssen, um das gewünschte Regelungsverhalten, wie beispielsweise Regelfehler, Überschwingen, Stabilität, Ansprechverhalten usw., einzustellen. Der Regler muss daher parametriert werden, was bedeutet, dass den Reglerparametern entsprechende Werte zugeordnet sein müssen. Diese Reglerparameter sind üblicherweise fest vorgegeben und werden im Betrieb nicht verändert. Die EP 3 251 986 A1 beschreibt die Parametrierung der Reglerparameter bei einem Langstatorlinearmotor. Dabei kann auch vorgesehen sein, für verschiedene Transporteinheiten oder für verschiedene Stellen der Transportstrecke verschiedene Reglerparametersätze zu verwenden, um das Regelungsverhalten bestmöglich an verschiedene Transporteinheiten, beispielsweise aufgrund unterschiedlicher Beladung, Verschleißzustand, Ausführung usw., anpassen zu können. Zur Parametrierung wird die Regelstrecke mit einem Anregungssignal, das den Stellgrößen überlagert wird, angeregt und die Reaktion der Regelstrecke auf die Anregung in Form des Frequenzganges ausgewertet, um daraus die Reglerparameter abzuleiten. Das ist zum einen aufwendig und kann zum anderen nur an einer bestimmten Stelle der Transportstrecke und für eine bestimmte Transporteinheit gemacht werden. Bei diesem Ansatz kann die Regelung zwar verbessert werden, ist aber immer noch unflexibel.

US 8,344,669 B1 beschreibt als nächstliegende Schrift ein Verfahren zum Betreiben eines Linearmotors. Bei diesem Verfahren wird zur Ermittlung der Spulenströme der Antriebsspulen ein Gütefunktional mit Gütetermen verwendet. Das Gütefunktional wird optimiert, um die Spulenströme der Antriebsspulen zu ermitteln. Für die Regelung der Bewegung der Transporteinheit des Linearmotors wird das Gütefunktional nicht geändert. Das Gütefunktion wird einmal gewählt und bleibt dann während der Bewegung der Transporteinheit gleich. Damit ist auch dieses Verfahren zur Regelung eines Linearmotors unflexibel.

Es ist eine Aufgabe der gegenständlichen Erfindung die Regelung der Bewegung einer Transporteinheit eines Linearmotors zu verbessern, insbesondere flexibler zu machen.

Diese Aufgabe wird mit den Merkmalen des unabhängigen Verfahrensanspruchs 1 und mit den Merkmalen des unabhängigen Vorrichtungsanspruchs 18 gelöst.

Für eine möglichst genaue Regelung der Bewegung enthält das Gütefunktional einen Güteterm, der eine Abweichung einer vorgegebenen Sollgröße der Regelung von einer von der Stellgröße abhängigen Istgröße der Regelung bewertet. Das erlaubt eine hohe Regelgüte der Regelung der Bewegung der Transporteinheit. Durch die Verwendung unterschiedlicher Gütefunktionale in verschiedenen Bewegungsphasen der Bewegung der Transporteinheit kann die Regelung an die jeweilige Bewegung flexibel angepasst werden und verschiedene Regelungsziele in den Bewegungsphasen verfolgt werden. Die Bewegungsphasen können entlang des Stators flexibel konfiguriert werden, ebenso wie die Gütefunktionale in den Bewegungsphasen. Am grundlegenden Ablauf der Regelung der Bewegung der Transporteinheit ändert das nichts, da lediglich unterschiedliche Gütefunktionale optimiert werden.

Die optimierungsbasierte Regelung der Bewegung der Transporteinheit erlaubt sowohl die online Optimierung, als auch die offline Optimierung des Gütefunktionals. Das erhöht die Flexibilität der Regelung der Bewegung weiter.

Bei der offline Optimierung ist es insbesondere vorteilhaft, für verschiedene Gütefunktionale vorab Bewegungskennfelder zu erstellen, die eine Bewegungssollgröße, insbesondere eine Antriebskraft, und eine Position der Transporteinheit relativ zu den aktiven Antriebsspulen auf die optimalen Stellgrößen abbildet. Damit müssen die optimalen Stellgrößen zur Regelung der Bewegung der Transporteinheit online nur mehr aus dem richtigen Bewegungskennfeld ausgelesen werden.

Vorzugsweise enthält das Gütefunktional einen Güteterm, der die elektrische Leistung bewertet, die für die Bewegung der Transporteinheit benötigt wird. Das ermöglicht es, eine Bewegungsphase vorzusehen, in der die Bewegung der Transporteinheit mit möglichst wenig elektrischer Verlustleistung erfolgt. Das erlaubt einen energieeffizienten Betrieb des Linearmotors.

Wenn das Gütefunktional einen Güteterm enthält, der eine Summe der Stellgrößen bewertet, kann die thermische Belastung der Komponenten der Leistungselektronik zum Umsetzen der Stellgrößen und die Erwärmung des Stators reduziert werden.

Vorteilhafterweise wird ein mathematisches Modell des Linearmotors verwendet, mit dem eine Variable eines Güteterms ermittelt werden kann oder das für eine Nebenbedingung der Optimierung verwendet werden kann. Mit dem Modell können bestimmte Variablen oder Größen berechnet werden, anstatt diese im Linearmotor zu messen. Mit dem Modell können auch die Zustandsgrößen des Linearmotors und auch alle nötigen Ausgangsgrößen ermittelt werden. Bei Verwendung einer Nebenbedingung wird sichergestellt, dass die physikalischen Gesetzmäßigkeiten des Linearmotors berücksichtigt werden, was ganz allgemein die Regelungsqualität verbessern kann.

Besonders vorteilhaft wird der Lineramotor mit einem Reluktanznetzwerk mathematisch modelliert, also mit Systemgleichungen, die aus dem Reluktanznetzwerk abgeleitet werden und die die physikalischen Gesetzmäßigkeiten widerspiegeln. Mit einem Reluktanzmodell kann eine hohe Systemgüte (Genauigkeit) im Vergleich zur Modellkomplexität erreicht werden.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt

Fig.1 und 2 einen möglichen Aufbau eines Langstatorlinearmotors mit Stator mit Zähnen mit Antriebsspulend und mit einer Transporteinheit mit Antriebsmagneten,
Fig.3 und 4 ein Reluktanznetzwerk des Stators,
Fig.5 ein Reluktanznetzwerk des Läufers und dessen Kopplung mit dem Stator,
Fig.6 eine Regelung der Bewegung einer Transporteinheit durch Optimierung eines Gütefunktionals,
Fig.7 und 8 mögliche Ausführungen der Regelung der Bewegung der Transporteinheit und
Fig.9 ein Beispiel eines Bewegungskennfeldes.

Die Erfindung wird am Beispiel eines Langstatorlinearmotors als Ausführung eines Linearmotors beschrieben, kann in analoger Weise aber auch auf andere Ausführungen eines Linearmotors, wie beispielsweise ein Planarmotor oder ein Kurzstatorlinearmotor, angewendet werden.

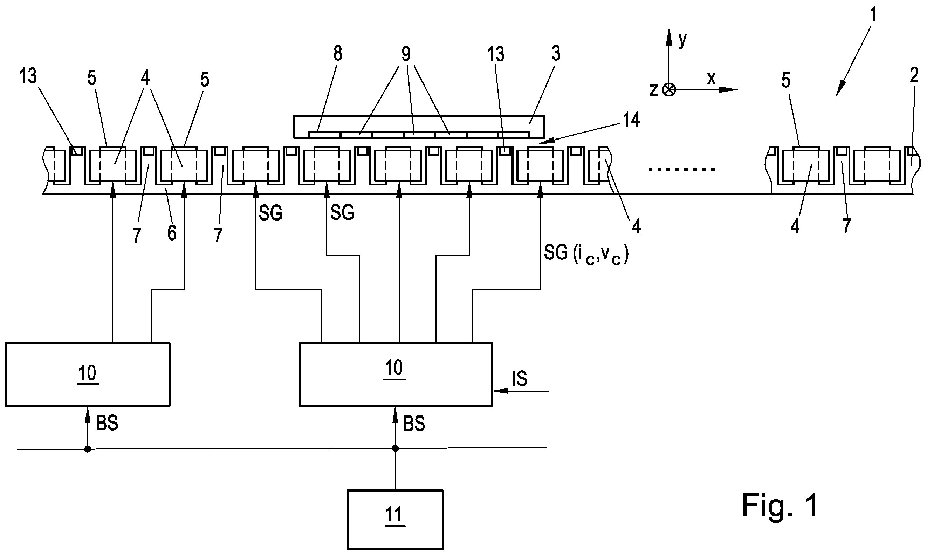

In Fig.1 ist beispielhaft ein Abschnitt eines Langstatorlinearmotors 1 sehr vereinfacht dargestellt. Der Langstatorlinearmotor 1 besteht aus einem Stator 2 und zumindest einer Transporteinheit 3, die entlang des Stators 2 in Bewegungsrichtung x bewegt werden kann. Der Stator 2 ist im gezeigten Ausführungsbeispiel der Primärteil des Linearmotors und die Transporteinheit 3 der Sekundärteil. Üblicherweise werden eine Vielzahl von Transporteinheiten 3 (auch unterschiedliche Transporteinheiten) gleichzeitig und unabhängig voneinander entlang des Stators 2 bewegt. Der konstruktive Aufbau und die Geometrie des Stators 2 und der Transporteinheit 3 spielt für die Erfindung keine Rolle, beeinflusst aber natürlich den Aufbau des nachfolgend beschriebenen Modells des Linearmotors 1. Ebenso wenig spielt für die Erfindung eine Rolle, wie die Transporteinheit 3 entlang des Stators 2 geführt und gehalten wird.

In Bewegungsrichtung x sind entlang des Stators 2 eine Vielzahl von Antriebsspulen 4 nebeneinander angeordnet. Eine Antriebsspule 4 ist üblicherweise auf einem Statorzahn 5 aus einem magnetisch hochpermeablen Material, wie z.B. Eisen, angeordnet, die durch ein Statorjoch 6 miteinander verbunden sind. Zwischen zwei Statorzähnen 5 mit einer Antriebsspule 4 kann auch ein Nebenzahn 7 ohne Antriebsspule 4 vorgesehen sein. Die Nebenzähne 7 können aber auch entfallen. An der Transporteinheit 3 ist eine Antriebsmagnetanordnung 8 mit einer Anzahl von Antriebsmagneten 9 angeordnet. In Bewegungsrichtung x nebeneinander angeordnete Antriebsmagnete 9 der Antriebsmagnetanordnung 8 sind üblicherweise gegengleich gepolt. Die Antriebsmagnetanordnung 8 ist den Antriebsspulen 4 zugewandt und durch einen Luftspalt 14 von diesen getrennt. Die Aufrechterhaltung des Luftspaltes 14 wird in der Regel durch die nicht dargestellte, üblicherweise mechanische und/oder magnetische, Führung der Transporteinheit 3 am Stator 2 sichergestellt.

Wie bereits erwähnt wären bei einem Planarmotor die Antriebsspulen 4 in einer Bewegungsebene des Stators 2 angeordnet. Ebenso wären die Antriebsmagnete 9 in einer Ebene angeordnet. Bei einem Planarmotor gibt es üblicherweise keine mechanische Führung der Transporteinheit 3, sondern die Transporteinheit 3 wird üblicherweise magnetisch in Schwebe gehalten.

Eine Anzahl von Antriebsspulen 4 im Bereich der Antriebsmagnetanordnung 8 der Transporteinheit 3 wirkt zur Bewegung der Transporteinheit 3 mit den Antriebsmagneten 9 der Antriebsmagnetanordnung 8 zusammen. Wieviele Antriebsspulen 4 für die Bewegung der Transporteinheit 3 verwendet werden kann als bekannt vorausgesetzt werden und kann festgelegt sein, kann aber auch abhängig von der Position der Transporteinheit 3 relativ zum Stator 2 sein und kann aber abhängig von der nachfolgend beschriebenen Optimierung festgelegt sein. Die Anzahl der Antriebsspulen 4 kann damit auch als Resultat der Optimierung hervorgehen, womit die Optimierung bestimmt, wie viele Antriebspulen 4 in der Umgebung Transporteinheit 3 wie bestromt werden sollen. Diese bestromten Antriebsspulen 4, nachfolgend auch als aktive Antriebsspulen bezeichnet, werden von einer Regelungseinheit 10 geregelt. Welche der Antriebsspulen 4 die aktiven Antriebsspulen sind, ändert sich natürlich während der Bewegung der Transporteinheit 3 relativ zum Stator 2.

Es sei aber angemerkt, dass nicht zwingend immer alle Antriebsspulen 4 im Bereich der Antriebsmagnetanordnung 8 aktive Antriebsspulen sein müssen. Es sind Situationen denkbar, in denen nur gewisse Antriebsspulen 4 im Bereich der Antriebsmagnetanordnung 8 als aktive Antriebsspulen verwendet werden. Beispielsweise kann eine Antriebsspule 4 ausgefallen sein und kann damit nicht für die Bewegung der Transporteinheit 3 verwendet werden. Trotzdem kann die Transporteinheit 3 mit den anderen Antriebsspulen 4 im Bereich der Antriebsmagnetanordnung 8 als aktive Antriebsspulen bewegt werden.

Um einen Ausfall des Langstatorlinearmotors 1 bei Ausfall einer Antriebsspule 4 zu vermeiden, kann vorgesehen sein, dass die Regelungseinheit 10 die ausgefallene Antriebsspule 4 einfach ignoriert. Das kann aber zu einer gewissen Beeinträchtigung der Bewegung der Transporteinheit 3 führen, die aber in gewissen Situationen vernachlässigbar sein kann, beispielsweise in Abschnitten der Bewegung ohne Genauigkeitsanforderungen an die Bewegung der Transporteinheit 3. Die Regelungseinheit 10 kann den Ausfall einer Antriebsspulen 4 aber auch mit den verbleibenden aktiven Antriebsspulen kompensieren, um den Ausfall des Langstatorlinearmotors 1 zu vermeiden. Dazu wäre es lediglich erforderlich, der Regelungseinheit 10 mitzuteilen, welche Antriebsspule 4 ausgefallen ist. Das ließe sich auch sehr einfach im Rahmen der gegenständlichen Erfindung machen, wie nachfolgend noch ausgeführt wird.

Um einen Ausfall einer Antriebsspulen 4 festzustellen, könnte an diese ein Spulenstrom oder eine Spulenspannung angelegt werden. Dann könnte man durch Messen einer Spulenspannung oder eines Spulenstromes feststellen, ob eine Antriebsspule 4 im Kurzschluss oder im Leerlauf ist, was einem Ausfall gleich kommt weil die Antriebsspule nicht mehr aktuierbar ist. Das könnte laufend im Betrieb des Langstatorlinearmotors 1 erfolgen, auch während der Regelung der Bewegung der Transporteinheit 3.

Es können auch in Bewegungsrichtung x gesehen zu beiden Seiten der Transporteinheit 3 Antriebsspulen 4 angeordnet sein. In diesem Fall kann die Transporteinheit 3 ebenfalls an beiden in Bewegungsrichtung x gesehenen Seiten eine Antriebsmagnetanordnung 8 aufweisen. Damit kann bei einem solchen Aufbau an beiden Seiten der Transporteinheit 3 auf die Transporteinheit 3 wirkende Kräfte erzeugt werden. Das ändert aber nichts an der nachfolgend beschriebenen erfindungsgemäßen Regelung.

Die Regelungseinheit 10 verwendet eine Bewegungssollgröße BS, die beispielsweise von einer Anlagensteuereinheit 11 vorgegeben wird, beispielsweise über einen Datenkommunikationsbus wie in der Fig.1 angedeutet. Die Anlagensteuereinheit 11 steuert und überwacht beispielsweise die gleichzeitige Bewegung mehrerer Transporteinheiten 3 auf dem Stator 2. In jedem Zeitschritt der Regelung, üblicherweise im 1/10 Millisekundenbereich, wird von der Regelungseinheit 10 anhand der Bewegungssollgröße BS mit einer darauf implementierten Regelung (beispielsweise in Form von auf einer prozessorbasierten Hardware laufenden Regelungssoftware) eine Stellgröße SG für eine Anzahl oder jede an der Bewegung der Transporteinheit 3 beteiligte aktive Antriebsspule 4 ermittelt. Es kann aber auch eine Regelungseinheit 10 für jede Antriebsspule 4 vorgesehen sein. Die Stellgrößen SG der aktiven Antriebsspulen 4 sind üblicherweise nicht gleich.

Die Stellgröße SG kann ein Spulenstrom $i_C$ oder eine Spulenspannung $v_C$ sein, mit dem die Antriebsspule 4 bestromt wird. Der Spulenstrom $i_C$ oder die Spulenspannung $v_C$ kann von einer nicht dargestellten Leistungselektronik, beispielsweise wie in der EP 3 249 803 A1 beschrieben, für jede beteiligte Antriebsspule 4 erzeugt und an die Antriebsspulen 4 angelegt werden. Üblicherweise ist die Stellgröße SG eine Spulenspannung $v_C$, die an die aktiven Antriebsspulen 4 angelegt wird.

Im Fall eines Spulenstromes $i_C$ als Stellgröße SG kann, wie nachfolgend noch ausgeführt, auch noch eine Umrechnung in eine Spulenspannung $v_C$ vorgesehen sein, oder ein Stromregler, der den Spulenstrom $i_C$ einregelt. Das kann in der Regelungseinheit 10 erfolgen, oder auch in der Leistungselektronik.

Die Bewegungssollgröße BS kann für jeden Zeitschritt der Regelung vorgegeben werden, beispielsweise eine Sollposition der Transporteinheit 3 entlang des Stators 2, oder eine Sollgeschwindigkeit oder auch eine Sollkraft. Die Bewegungssollgröße BS kann aber auch in der Regelungseinheit 10 selbst ermittelt werden, beispielsweise anhand einer geplanten Bewegung (z.B. als Verlauf der Position oder Geschwindigkeit der Transporteinheit 3 über die Zeit oder Strecke) entlang des Stators 2. Diese geplante Bewegung kann der Regelungseinheit 10 vorgegeben werden, kann aber in der Regelungseinheit 10 auch berechnet werden, beispielsweise um eine vorgegebene Zielposition entlang des Stators 2 zu erreichen.

Zur Regelung der Bewegung der Transporteinheit 3 kann auch vorgesehen sein, eine Istgröße der Bewegung, beispielsweise eine Istposition, der Transporteinheit 3 entlang des Stators 2 zu ermitteln, beispielsweise anhand von bekannten Positionssensoren 13 (in Fig.1 angedeutet), die entlang des Stators 2 angeordnet sind.

Üblicherweise werden aus der Bewegungssollgröße BS in einem vorgelagerten Bewegungsregler für die Transporteinheit 3 in jedem Zeitschritt der Regelung die notwendigen, der Transporteinheit 3 einzuprägenden Antriebskräfte und/oder Antriebsmomente ermittelt, damit die Transporteinheit 3 die gewünschte und vorgegebene Bewegung ausführt. Der Bewegungsregler kann in der Regelungseinheit 10 implementiert sein, kann aber auch eine eigenständige Einheit sein. Aus den einzuprägenden Antriebskräften und/oder Antriebsmomenten werden dann die Stellgrößen SG für die aktiven Antriebsspulen 4 ermittelt. Die an der Umsetzung der Bewegung aktiven Antriebsspulen 4 werden somit so bestromt, dass die für die vorgegebene Bewegung benötigten Antriebskräfte und/oder Antriebsmomente erzeugt werden.

Die Regelungseinheit 10 kann dabei auch eventuell ausgefallene Antriebsspulen 4 berücksichtigen und die Stellgrößen SG für die aktiven Antriebsspulen 4 ermitteln, sodass eine ausgefallene Antriebsspulen 4 im Bereich der Antriebsmagnetanordnung 8 kompensiert wird, um die gewünschte und vorgegebene Bewegung auszuführen. Das für die Bewegung der Transporteinheit 3 erforderliche elektromagnetische Feld wird damit mit den aktiven Antriebsspulen 4, ohne der ausgefallenen Spule, erzeugt.

Das ermöglicht ein Verfahren zum Betreiben eines Linearmotors 1 mit einem Stator 2, an dem eine Mehrzahl von Antriebsspulen 4 angeordnet sind, und mit einer entlang des Stators 2 bewegten Transporteinheit 3, an der eine Mehrzahl von Antriebsmagnete 9 angeordnet sind, wobei durch das Bestromen von aktiven Antriebsspulen 4 im Bereich der Antriebsmagnete 9 der Transporteinheit 3 ein elektromagnetisches Feld erzeugt wird, das zum Bewegen der Transporteinheit 3 mit den Antriebsmagneten 9 der Transporteinheit 3 zusammenwirkt. Eine Regelungseinheit 10 ermittelt Stellgrößen SG, vorzugsweise Spulenströme $i_c$ oder Spulenspannungen $v_c$, für die aktiven Antriebsspulen 4. Die aktiven Antriebsspulen 4 werden gemäß den ermittelten Stellgrößen SG bestromt, um die Bewegung der Transporteinheit 3 zu regeln. Das kann in vorgegebenen Zeitschritten der Regelung der Bewegung erfolgen. Die Regelungseinheit 10 hat Kenntnis über eine ausgefallene Antriebsspule 4 oder erkennt selbst eine ausgefallene Antriebsspule 4 im Bereich der Antriebsmagnetanordnung 8. Die Wirkung der ausgefallenen Antriebsspule 4 wird zum Bewegen der Transporteinheit 3 durch die verbliebenen aktiven Antriebsspulen 4 kompensiert. Die Regelungseinheit 10 erzeugt dafür die Stellgrößen SG für die verbliebenen aktiven Antriebsspulen 4, sodass die ausgefallene Antriebsspule 4 zum Bewegen der Transporteinheit 3 kompensiert wird. Das kann mit einer Optimierung wie nachfolgend beschrieben und in den Patentansprüchen beansprucht durchgeführt werden.

Die Regelungseinheit 10 und/oder ein Bewegungsregler kann eine mikroprozessorbasierte Hardware sein, auf der Regelungssoftware ausgeführt wird. Die Regelungseinheit 10 und/oder ein Bewegungsregler kann aber auch als Computersoftware implementiert sein, die auf einer verfügbaren Computerhardware installiert und ausgeführt wird. Die Regelungseinheit 10 und/oder ein Bewegungsregler kann aber auch als integrierter Schaltkreis, wie eine anwendungsspezifische integrierte Schaltung (ASIC) oder Field Programmable Gate Array (FPGA) ausgeführt sein, auf dem auch ein Mikroprozessor implementiert sein kann. Die Regelungseinheit 10 kann aber auch als analoger Schaltkreis ausgeführt sein, beispielsweise als analoger Computer. Auch Kombinationen davon sind möglich.

Zur Regelung der Bewegung der Transporteinheit 3 werden somit zu jedem Zeitschritt der Regelung für jede aktive Antriebsspule 4 die Stellgröße SG, Spulenstrom $i_c$ oder vorzugsweise die Spulenspannung $v_c$, ermittelt, mit denen die aktiven Antriebsspulen 4 bestromt werden, um die für die Bewegung erforderlichen magnetischen Flüsse zu erzeugen.

Um die Stellgröße SG, wie z.B. den Spulenstrom $i_c$ oder die Spulenspannung $v_c$, der aktiven Antriebsspulen 4 zu ermitteln, wird ein Gütefunktional J verwendet, das eine Funktion zumindest einer zu ermittelnden Stellgröße SG der aktiven Antriebsspulen 4 ist, also J=f(SG), wobei SG jeweils ein Vektor mit den zu ermittelnden Stellgrößen der einzelnen beteiligten aktiven Antriebsspulen 4 ist. Konkret ist das Gütefunktional J eine Summe einer Anzahl $k \geq 1$ von

$$J(SG) = \sum_k k_k \cdot JT_k(SG)$$

mit Gewichtungsfaktoren $k_k$ gewichteten Gütetermen $JT_k$, also . Zumindest ein, vorzugsweise jeder, Güteterm $JT_k$ ist eine Funktion einer Stellgröße SG der aktiven Antriebsspulen 4. Vorzugsweise wird eine quadratische Funktion verwendet, da diese ein globales Minimum hat und daher für eine Optimierung gut geeignet ist. Das Gütefunktional J und damit auch ein Güteterm $JT_k$ kann aber auch noch von anderen Größen des Linearmotors 1 abhängig sein, beispielsweise von einer Position der Transporteinheit 3 relativ zum Stator 2 oder von magnetischen Größen (wie der magnetische Fluss) im Stator 2.

Wenn der Regelungseinheit 10 bekannt ist, ob und welche Antriebsspule 4 ausgefallen ist, kann das im Gütefunktional J im Vektor der Stellgrößen SG berücksichtigt werden. Damit würde ein Ausfall einer Antriebsspule 4 auch automatisch kompensiert werden.

Dieses Gütefunktional J(SG) der Regelung wird optimiert (maximiert oder minimiert), in der Regel minimiert, um die Stellgrößen SG für die beteiligten aktiven Antriebsspulen 4 zu ermitteln, die im jeweiligen Zeitschritt erzeugt werden, um die Antriebsspulen 4 zu bestromen. Optimierung bedeutet, dass diejenigen Stellgrößen SG gesucht werden, die das Gütefunktional J(SG) minimieren oder maximieren. Diese Stellgrößen SG werden auch als optimale Stellgrößen $SG_{opt}$ bezeichnet.

Die Optimierung kann online, also in jedem Zeitschritt der Regelung, durchgeführt werden, oder auch offline. Bei der offline Optimierung können für ein bestimmtes vorgegebenes Bewegungsszenario der Transporteinheit 3 (beispielsweise als zeitlicher Verlauf der Position oder Geschwindigkeit der Transporteinheit über die Zeit oder über die Strecke) die während der Durchführung des Bewegungsszenario einzustellenden Stellgrößen SG vorab berechnet. Dazu kann das Bewegungsszenario in gewissen Zeitschritten diskretisiert werden und die Optimierung in jedem dieser Zeitschritte durchgeführt werden. Zwischen den Zeitschritten kann auch interpoliert werden. Damit liegen die Stellgrößen SG zu jedem benötigten Zeitpunkt der Bewegung der Transporteinheit 3, insbesondere in jedem Zeitschritt der Regelung, vor. Da in einem Transportsystem die Bewegung einer Transporteinheit 3 üblicherweise vorab geplant wird, ist das Bewegungsszenario bekannt. Wenn das Bewegungsszenario nicht oder nur teilweise bekannt ist, dann kann die tatsächliche Bewegung der Transporteinheit 3 verzögert werden, sodass wieder hinreichend Information über die Bewegung bekannt wird.

Bei der offline Optimierung können auch Bewegungskennfelder erzeugt werden. Bei der Bewegung der Transporteinheit 3 entlang des Stators 2 mit einer bestimmten Geschwindigkeit, was einer bestimmten auf die Transporteinheit 3 wirkenden Antriebskraft in Bewegungsrichtung entspricht, werden die Antriebsmagnete 8 der Transporteinheit 3 an den Antriebsspulen 4 vorbeibewegt. Damit wiederholen sich aber die in die aktiven Antriebsspulen 4 einzuprägenden Spulenspannungen $v_C$ oder Spulenströme $i_C$. Das ermöglicht es, für ein bestimmtes Bewegungsszenario in Form einer Kombination aus Position und Antriebskraft offline ein Bewegungskennfeld für die Spulenspannungen $v_C$ oder Spulenströme $i_C$ zu erstellen. Während der Bewegung der Transporteinheit 3 müssen dann nur in Abhängigkeit von der aktuell benötigten Antriebskraft und der aktuellen Position im Bewegungskennfeld die benötigten Spulenspannungen $v_C$ und/oder Spulenströme $i_C$ ausgelesen werden. Solche Bewegungskennfelder können auch für verschiedene Gütefunktionale J(SG) erstellt werden.

Mathematisch kann die Optimierung allgemein als $\min\limits_{SG} J(SG)$ angeschrieben werden (wobei die Kostenfunktion J wie erwähnt auch noch von anderen Größen als den Stellgrößen SG abhängig sein kann).

Die Optimierung kann auch unter Berücksichtigung einer Nebenbedingung g erfolgen. Die Nebenbedingung g beschreibt die physikalischen Gesetzmäßigkeiten des Linearmotors 1. Diese Gesetzmäßigkeiten werden in Form eines mathematischen Modells des Linearmotors 1 formuliert, vorzugsweise ebenfalls als Funktion der Stellgröße SG und gegebenenfalls von weiteren Größen (wie Zustandsgrößen) des Linearmotors 1. Das mathematische Modell kann ein Modell sein, das die zugrundeliegenden physikalischen Gesetzmäßigkeiten des Linearmotors 1 modelliert, beispielsweise den Zusammenhang zwischen Spulenstron $i_c$ oder Spulenspannung $u_c$ und den magnetischen Größen wie dem magnetischen Fluss. Das mathematische Modell kann aber auch ein trainiertes Modell sein, beispielsweise ein lokales Modellnetzwerk oder ein neuronales Netzwerk. Allgemein wird mit dem Modell die Reaktion des Linearmotors 1 in Form einer Ausgangsgröße oder einer Zustandsgröße (beides üblicherweise Vektoren), oder auch beides, auf eine Eingangsgröße (üblicherweise ein Vektor) abgebildet. Die Eingangsgröße ist üblicherweise die Stellgröße SG, beispielsweise ein Spulenstrom $i_c$ oder eine Spulenspannung $u_c$. Die Ausgangsgröße kann beispielsweise eine wirkende Antriebskraft (Vortriebskraft und/oder Normalkraft) oder Antriebsmoment auf die Transporteinheit 3 sein, aber auch eine Bewegungsgröße der Transporteinheit 3 wie eine Position entlang des Stators 2, eine Geschwindigkeit in Bewegungsrichtung x und/oder Normalrichtung y oder eine Beschleunigung in Bewegungsrichtung x und/oder Normalrichtung y. Bei einem Planarmotor können die Antriebskräfte in einer Bewegungsebene wirken, also in einer x-z-Ebene. Die Ausgangsgröße kann auch ein Summenstrom der beteiligten Antriebsspulen 4 (wie ein q- oder d-Strom) sein. Nach den kinematischen Grundgesetzen sind die Antriebskräfte / Antriebsmomente und die Bewegungsgrößen äquivalent, oder anders ausgedrückt sind die sich ergebenden Bewegungsgrößen die Folge der wirkenden Kräfte / Momente. Die Antriebskräfte / Antriebsmomente entsprechen einem Summenstrom. Die Zustandsgrößen, die den Zustand des Langstatorlinearmotors 1 beschreiben, sind beispielsweise die sich aufgrund der wirkenden Eingangsgröße ergebenden magnetischen Größen im Langstatorlinearmotor 1, wie beispielsweise die magnetischen Flüsse, magnetische Potentiale oder Spannungen.

Eine ausgefallene Antriebsspule 4 kann auch als zusätzliche Nebenbedingung g formuliert werden, beispielsweise in Form einer mathematischen Formulierung für "Antriebsspule mit der Nummer xy ausgefallen". Beispielsweise ließe sich das durch einen Vektor für alle Antriebsspule 4 realisieren, der für jede Antriebsspule 4 einen Binärwert enthält, wobei "0" beispielsweise für ausgefallen stehen könnte und "1" für nicht ausgefallen.

Mathematisch kann die Optimierung unter Berücksichtigung der Nebenbedingung g allgemein wie folgt angeschrieben werden (wobei die Kostenfunktion J und/oder die Nebenbedingung g wie erwähnt auch noch von anderen Größen als den Stellgrößen SG abhängig sein kann).

$$\min_{SG} J(SG) \qquad g(SG) = 0$$

Um derartige Optimierungsprobleme zu lösen, gibt es eine Fülle von bekannten Lösungsalgorithmen, wie beispielsweise das Gradientenverfahren, das Newton Verfahren, evolutionäre Verfahren oder sequentielle quadratische Programmierung, um nur einige zu nennen. Die Wahl des Lösungsalgorithmus spielt für die Erfindung aber keine Rolle, wobei man aber natürlich ein solches Verfahren wählen wird, das hinsichtlich Rechenaufwand und Rechenzeit vorteilhaft ist (insbesondere bei einer online Optimierung). Den Lösungsverfahren ist gemein, dass, üblicherweise iterativ, mögliche Lösungen des Optimierungsproblems gesucht werden, bis ein definiertes Abbruchkriterium erreicht wird. Das Abbruchkriterium kann beispielsweise eine Anzahl von Iterationen sein, oder das Unterschreiten eines Grenzwertes der Differenz der Lösungen zweier aufeinanderfolgender Iterationsschritte des Optimierungsproblems, oder auch ein anderes Abbruchkriterium. Die Auswahl der Lösungen (also der Stellgrößen SG) in jedem Iterationsschritt erfolgt durch die Regeln des Lösungsverfahrens, wobei im ersten Iterationsschritt eine geeignete Wahl der Lösung als Startwert vorgegeben werden kann. Beim Gradientenverfahren ermittelt man beispielsweise den Gradienten des Gütefunktionals (Ableitung des Gütefunktionals nach der Stellgröße) und wählt die Stellgröße für den nächsten Iterationsschritt entlang dieses Gradienten, wobei die Schrittweite von der aktuellen Stellgröße zur nächsten Stellgröße durch die vorgegebenen Regeln des Lösungsverfahrens bestimmt wird.

Nachdem die Bewegung der Transporteinheit 3 entlang des Stators 2 geregelt werden soll, enthält das Gütefunktional J(SG) einen Güteterm JTk(SG), der eine Abweichung einer vorgegebenen Bewegungssollgröße BS der Regelung der Bewegung der Transporteinheit 3 von einer von der Stellgröße SG abhängigen Istgröße IS der Regelung, vorzugsweise eine Bewegungsistgröße, bewertet, wie weiter unten noch im Detail ausgeführt wird. Der Zusammenhang ist dabei wie bei einer Regelung üblich derart, dass zu jeden Zeitschritt der Regelung die Stellgröße SG so erzeugt werden soll, dass die Istgröße IS, die von der Stellgröße SG bewirkt wird, einer vorgegebenen Bewegungssollgröße BS möglichst gut, üblicherweise ein bestimmter maximaler Regelfehler, entsprechen soll. Die Istgröße IS wird üblicherweise gemessen oder aus anderen gemessen Größen ermittelt.

Bei Linearmotoren 1 eines Transportsystems ist es in der Regel so, dass eine Transporteinheit 3 über eine gewisse Strecke entlang des Stators 2 bewegt werden kann, auch über mehrere über Weichen zusammenhängende Strecken. Eine Strecke wird vorab oder auch während der Bewegung für jede Transporteinheit 3 geplant, was auch die Planung eines Bewegungsprofils (Bewegungsgröße, wie Geschwindigkeit, über Zeit oder Strecke) umfassen kann. Entlang der Strecke können auch Bearbeitungsstationen vorgesehen sein, in denen ein mit der Transporteinheit 3 bewegtes Objekt bearbeitet wird. Eine Transporteinheit 3 kann während der Bewegung entlang der Strecke auch unterschiedliche oder sich verändernde Objekte befördern, beispielsweise Flaschen, die gefüllt werden. Kurzum können sich die Anforderungen an der Bewegung der Transporteinheit 3 während der Bewegung entlang einer Strecke des Linearmotors 1 ändern.

Um das in der Regelung der Bewegung der Transporteinheit 3 auf einfache Weise abbilden zu können, ist vorgesehen, dass es bei der Bewegung der Transporteinheit 3 entlang der Strecke zumindest zwei Bewegungsphasen gibt, wobei in den Bewegungsphasen unterschiedliche Gütefunktionale J(SG) verwendet werden. Die Gütefunktionale J(SG) können sich durch die Anzahl k der verwendeten Güteterme $JT_k$(SG) und/oder durch die verwendeten Güteterme $JT_k$(SG) und/oder durch die Gewichtungsfaktoren $k_k$ unterscheiden. Damit kann die Regelung der Bewegung der Transporteinheit 3 in den verschiedenen Bewegungsphasen situationsbedingt und flexibel an unterschiedliche Anforderungen angepasst werden. Es ist sogar möglich, dies während des Betriebs des Linearmotors 1 zu machen.

Beispielsweise kann in einer ersten Bewegungsphase, in der keine besondere Genauigkeit in der Regelung der Bewegung der Transporteinheit 3 erforderlich ist, ein energieoptimaler Betrieb des Langstatorlinearmotors 1 angestrebt werden, während in einer zweiten Bewegungsphase, in der eine genaue Regelung der Bewegung erforderlich ist, eine genaue Regelung der Antriebskräfte erwünscht sein kann. Beispielsweise könnte im Bereich einer Weiche die Regelung der Bewegung der Transporteinheit 3 mit höherer Gewichtung der Regelung der Normalkräfte (in y-Richtung quer zur Bewegungsrichtung x) erfolgen. Außerhalb der Weiche aber mit höherer Energieeffizienz.

Ein Güteterm $JT_k$(SG) bewertet die Abweichung der Sollgröße BS der Regelung von der Istgröße IS der Regelung, vorzugsweise als Quadrat der Abweichung, also beispielsweise $JT_k(SG) = k_e(BS - IS(SG))^2$ oder $JT_k(SG) = k_e(BS - IS(SG))$, mit dem Gewichtungsfaktor $k_e$. Ein solcher Güteterm $JT_k$(SG) kann insbesondere bei einer online Optimierung verwendet werden, wo die aktuellen Istgrößen IS verfügbar sind (beispielsweise durch Messung). Die Istgröße IS kann gemessen werden, beispielsweise mit Positionssensoren 13, kann aber auch aus vorhandenen bekannten Messgrößen ermittelt werden, beispielsweise mit einem Beobachter, wobei das mathematische Modell des Linearmotors 1 auch Basis für den Beobachter sein kann. Bei einer offline Optimierung kann die Istgröße IS auch aus dem mathematischen Modell (also Ausgangsgröße oder Zustandsgröße des Modells) des Linearmotors 1 ermittelt werden. Nachdem die Istgröße IS von der Stellgröße SG abhängig ist, ist auch dieser Güteterm $JT_k(SG)$ indirekt abhängig von der Stellgröße SG. Hierbei kann beispielsweise die Abweichung einer Sollgeschwindigkeit von einer Istgeschwindigkeit oder die Abweichung einer Sollposition von einer Istposition oder die Abweichung einer Soll-Antriebskraft (oder auch Moment) von einer Ist-Antriebskraft (oder auch Antriebsmoment) oder die Abweichung eines magnetischen Sollflusses von einem Istfluss bewertet werden. Dieser Güteterm $JT_k(SG)$ bewertet demnach den Regelfehler. Nachdem die Position und die Geschwindigkeit natürlich eine Folge der an der Transporteinheit 3 angreifenden Antriebskraft und Antriebsmoment sind, und die Antriebskraft und Antriebsmoment abhängig vom magnetischen Fluss sind, sind die erwähnten Abweichungen äquivalent.

Dabei kann die auf die Transporteinheit 3 wirkende Antriebsraft oder das wirkende Antriebsmoment aus dem mathematischen Modell der Nebenbedingung g(SG) gewonnen werden, wobei die Antriebskraft eine Vortriebskraft (auch in einer x-z-Bewegungsebene) und/oder eine Normalkraft, aber auch eine Kraft in z-Richtung, sein kann. Auch das Antriebsmoment kann ganz allgemein ein Moment um eine der Achsen x, y, z sein. Die Antriebskraft und das Antriebsmoment kann ein Vektor mit Komponenten der verschiedenen Achsen x, y, z sein. Aus dem Modell kann dann die Ist-Antriebskraft oder das Ist-Antriebsmoment berechnet werden. Die Soll-Antriebskraft oder das Soll-Antriebsmoment wird beispielsweise aus der Bewegungssollgröße BS der Regelung ermittelt oder kann auch direkt als Sollgröße vorgegeben werden. Vorzugsweise wird ein Bewegungsregler implementiert, der aus der Bewegungssollgröße BS und einer aktuellen Bewegungsistgröße IS (wie eine Istposition oder Istgeschwindigkeit) anhand eines implementierten Regelgesetzes (z.B. ein PI oder PID-Regler) die benötigte Soll-Antriebskraft oder das benötigte Soll-Antriebsmoment ermittelt.

Ein anderer Güteterm $JT_k(SG)$ könnte beispielsweise die elektrische Leistung bewerten, die für die Bewegung der Transporteinheit 3 benötigt wird. Nachdem als Stellgröße SG die Spulenströme $i_C$ oder Spulenspannungen $v_C$ verwendet werden können, kann die elektrische Leistung einfach aus den Stellgrößen SG ermittelt werden. Nachdem als Stellgröße SG die Spulenströme $i_C$ oder Spulenspannungen $v_C$ verwendet werden können, bietet sich als leistungs-bewertender Güteterm $JT_k(SG)$ das Quadrat der euklidischen Norm $\left\|\cdot\right\|_2^2$ der Stellgrößen SG (die in einem Vektor zusammengefasst sein können) der beteiligten und bestromten aktiven Antriebsspulen 4 an, also z.B.

$$JT_k(SG) = k_i \cdot \left\|SG\right\|_2^2$$

, mit dem Gewichtungsfaktor $k_i$. Die euklidische Norm ist bekanntermaßen die Wurzel aus der Summe der Quadrate der Komponenten des Vektors der Stellgrößen SG. Das Quadrat davon ist folglich die Summe der Quadrate der Komponenten des Vektors. Nachdem die elektrische Leistung proportional zum Quadrat des elektrischen Stromes oder der elektrischen Spannung ist, wird mit dem Quadrat der euklidischen Norm $\left\|\cdot\right\|_2^2$ die umgesetzt elektrische Leistung, und damit auch die Energieeffizienz, bewertet.

Ein anderer Güteterm $JT_k(SG)$ könnte die Summe $SG_\Sigma$ der Werte der Stellgrößen SG der an der Bewegung der Transporteinheit 3 beteiligten Antriebsspulen 4, auch als Quadrat der Summe, sein, also beispielsweise $JT_k(SG) = k_\Sigma SG_\Sigma^2$ oder $JT_k(SG) = k_\Sigma SG_\Sigma$ , mit dem Gewichtungsfaktor $k_\Sigma$. Damit kann erreicht werden, dass die Summe der Stellgrößen bewertet wird. Je kleiner die Summe der Stellgrößen SG, umso geringer ist die Belastung der Leistungselektronik zur Erzeugung der Stellgrößen SG. Das kann für den langfristigen Betrieb des Langstatorlinearmotors 1 vorteilhaft sein, weil die Leistungselektronik möglichst gleichmäßig belastet wird. Insbesondere kann damit aufgrund der geringeren Verluste auch die thermische Belastung der Leistungselektronik, bzw. der Schaltungskomponenten in der Leistungselektronik, reduziert werden. Damit kann auch erreicht werden, dass sich der Stator 2 weniger erwärmt, was auch eine Kühlung des Stators 2 vereinfachen oder überflüssig machen kann.

Ein mögliches Gütefunktional J(SG) könnte damit wie folgt definiert sein.

$$J(SG) = \left( k_i \left\|SG\right\|_2^2 + k_\Sigma SG_\Sigma^2 + k_e \left( BS - IS(SG) \right)^2 \right)$$

Wenn die Vortriebskraft $F_x$ und die Normalkraft $F_z$ geregelt werden, kann das Gütefunktional J(SG) beispielsweise wie folgt angeschrieben werden.

$$J(SG) = \left( k_i \left\|SG\right\|_2^2 + k_\Sigma SG_\Sigma^2 + k_x \left( F_{xS} - F_x(SG) \right)^2 + k_y \left( F_{yS} - F_y(SG) \right)^2 \right)$$

Bei einem Planarmotor kann auch eine Antriebskraft $F_z$ in z-Richtung wirken und auch ein entsprechender

Güteterm $JT_k$ im Gütefunktional $J(SG)$ vorgesehen sein, Darin sind $F_{xS}$, $F_{yS}$, $F_{zS}$ die vorgegebenen Sollwerte der Kräfte und $F_x(SG)$, $F_y(SG)$, $F_z(SG)$ die mit dem mathematischen Modell ermittelten Istwerte der Kräfte. Natürlich kann auch nur die Vortriebskraft $F_x$, $F_z$ oder nur die Normalkraft $F_y$ in das Gütefunktional $J(SG)$ einfließen. In gleicher Weise können natürlich auch zusätzliche oder andere Komponenten der Antriebskraft, oder auch des Antriebsmoment, berücksichtigt werden.

Es ist offensichtlich, dass durch Verändern der Gewichtungsfaktoren $k_k$, wie beispielsweise $k_i$, $k_\Sigma$, $k_e$, $k_x$, $k_y$, $k_z$, und/oder durch Hinzufügen oder Entfernen bestimmter Güteterme $JT_k(SG)$, wie beispielsweise $\|SG\|_2^2$, $SG_\Sigma^2$, $(F_{xS} - F_x(SG))^2$, $(F_{yS} - F_y(SG))^2$, das Regelungsziel und das Verhalten der Regelung auf einfache Weise verändert werden kann. Natürlich sind auch andere oder zusätzliche Güteterme $JT_k(SG)$, als die oben beschriebenen möglich.

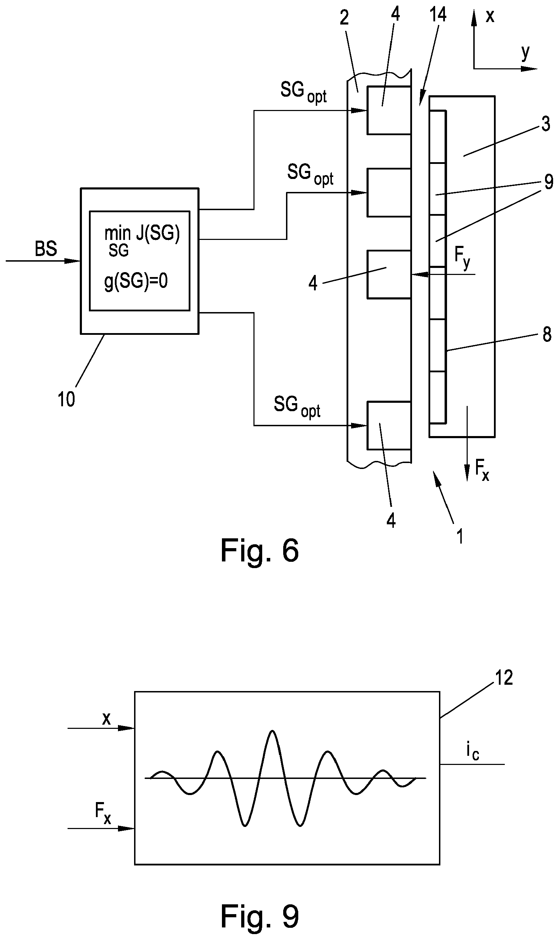

Durch (online oder offline) Optimierung des Gütefunktionales $J(SG)$ nach den Stellgrößen $SG$ können folglich optimale Stellgrößen $SG_{opt}$ ermittelt werden, die das Gütefunktional $J(SG)$ minimieren (oder auch maximieren). Diese optimalen Stellgrößen $SG_{opt}$ werden in jedem Zeitschritt der Regelung der Bewegung der Transporteinheit 3 am Linearmotor 1 umgesetzt, wie in Fig.6 schematisch dargestellt. Die Bewegungssollgröße BS ist beispielsweise eine Vorgabe für eine gewünschte Vortriebskraft $F_x$, $F_z$ und Normalkraft $F_y$ oder eine anzufahrende Position oder einzustellende Geschwindigkeit der Transporteinheit 3. Die Einhaltung dieser Bewegungssollgröße BS wird beispielsweise durch die Güteterme $(F_{xS} - F_x(SG))^2$, $(F_{yS} - F_y(SG))^2$, $(F_{zS} - F_z(SG))^2$, $(BS - IS(SG))^2$, oder auch anderer oder zusätzliche Komponenten der Antriebskraft oder des Antriebsmoments, sichergestellt, wobei die Genauigkeit der Einhaltung durch die zugehörigen Gewichtungsfaktoren $k_x$, $k_y$, $k_z$, $k_e$ beeinflusst werden kann. Dabei müssten die anderen Güteterme gar nicht vorhanden sein, oder könnten im Vergleich niedriger gewichtet sein. Wenn keine hohe Genauigkeit gefordert ist, könnte der Güteterm $\|SG\|_2^2$, der die elektrische Leistung, insbesondere Verlustleistung, charakterisiert, höher gewichtet werden oder hinzugefügt werden, um einen möglichst energiesparenden Betrieb zu ermöglichen. Das Gütefunktional $J(SG)$ wird damit während der Bewegung der Transporteinheit 3 in unterschiedlichen Bewegungsphasen geändert. Die unterschiedlichen Bewegungsphasen mit den verschiedenen Gütefunktionalen $J(SG)$ können vorab konfiguriert werden oder können auch erst während der Bewegung festgelegt werden, beispielsweise von der Anlagensteuereinheit 11.

Durch das Vorsehen von weiteren Gütetermen $JT_k$ können natürlich auch andere Aspekte des Betriebs des Linearmotors 1 berücksichtigt werden.

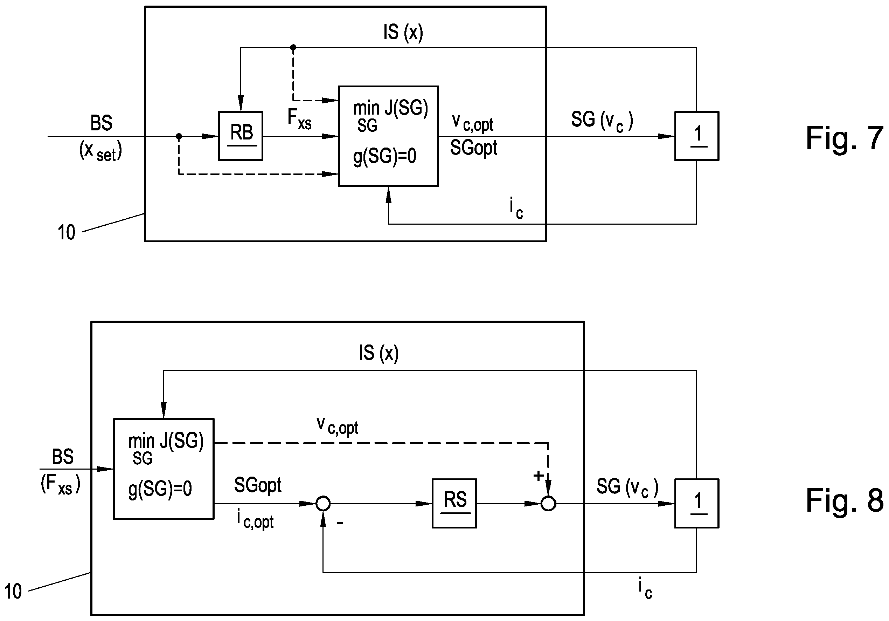

Mit Bezugnahme auf die Fig.6 und Fig.7 werden mögliche Ausführungsbeispiele für die Umsetzung der ermittelten optimalen Stellgrößen $SG_{opt}$ am Linearmotor 1, bzw. an den aktiven Antriebsspulen 4 des Linearmotors 1, beschrieben.

Im Beispiel nach Fig.7 wird die durch die Optimierung ermittelte optimale Stellgröße $SG_{opt}$, beispielsweise Spulenspannungen $v_{c,opt}$ der aktiven Antriebspulen 4, über die Leistungselektronik (nicht dargestellt) direkt erzeugt und an die Antriebsspulen 4 angelegt. Die Bewegungssollgröße BS ist in diesem Beispiel eine Sollposition $x_{set}$ der Transporteinheit 3. Diese Sollposition $x_{set}$ kann auch in der Optimierung verwendet werden, beispielsweise für einen Kostenterm $JT_k(SG) = k_e(BS - IS(SG))^2$. Dazu kann auch ein Istwert IS der Bewegungsgröße ermittelt (beispielsweise gemessen oder berechnet) werden, in diesem Fall z.B. eine aktuelle Istposition $x_{set}$, und in der Optimierung verwendet werden. Aus der Bewegungssollgröße BS und dem Istwert IS der Bewegungsgröße wird in einem Bewegungsregler RB, in diesem Beispiel ein Positionsregler, eine Antriebskraft $F_{xS}$ ermittelt, die eingestellt werden muss, um im aktuellen Zeitschritt der Regelung den Regelfehler zwischen Istwert IS und Bewegungssollgröße BS zu minimieren. Diese Antriebskraft $F_{xS}$ kann in der Optimierung beispielsweise für einen Kostenterm $(F_{xS} - F_x(SG))^2$ verwendet werden. Der Sollwert $F_{xS}$ der Antriebskraft könnte aber auch als Bewegungssollgröße BS vorgegeben werden. In diesem Fall könnte der Bewegungsregler RB auch getrennt von der Regelungseinheit 10 implementiert sein, beispielsweise als mikroprozessorbasierter Hardware mit darauf laufender Software oder als integrierter oder analoger Schaltkreis. In der Optimierung, insbesondere im mathematischen Modell des Linearmotors 1 für die Nebenbedingung $g(SG)$ der Optimierung, kann auch noch ein Istwert der Spulenströme $i_c$ der aktiven Antriebsspulen 4, der gemessen oder aus anderen bekannten Größen ermittelt werden kann, verwendet werden. Diese Ausführung der Regelungseinheit 10 eignet sich insbesondere für eine online Optimierung, weil in jedem Zeitschritt der Regelung aktuelle Istwerte am Linearmotor 1 erfasst werden, beispielsweise eine Istposition x und/oder ein Istwert des Spulenstromes $i_c$ (oder auch der Spulenspannung $v_c$). Diese Ausführung kann aber auch für eine offline Optimierung verwendet werden.

Im Ausführungsbeispiel nach Fig.8 werden die ermittelten optimalen Stellgrößen $SG_{opt}$ nicht direkt erzeugt und umgesetzt, sondern am Linearmotor 1 eingeregelt. Die mit der Optimierung ermittelte optimale Stellgröße $SG_{opt}$ sind beispielsweise die optimalen Spulenströme $i_{c,opt}$ der aktiven Antriebsspulen 4. Diese optimalen Spulenströme $i_{c,opt}$ werden in der Regelungseinheit 10 als Regelgrößen in einem Stellgrößenregler RS verwendet. Aus den optimalen Stellgrößen $SG_{opt}$, hier die Spulenströmen $i_{c,opt}$, und aktuellen Istwerten der Stellgröße $SG$, hier die Spulenströme $i_c$

der aktiven Antriebsspulen 4, konkret aus deren Abweichungen, ermittelt der Stellgrößenregler RS anhand eines implementierten Regelgesetzes (z.B. ein PI oder PID-Regler), in jedem Zeitschritt der Regelung die Stellgröße SG, hier Spulenspannungen $v_c$ der aktiven Antriebsspulen 4. Diese Stellgrößen SG, hier Spulenspannungen $v_c$, werden von einer Leistungselektronik (nicht dargestellt) erzeugt und an die Antriebsspulen 4 angelegt. Natürlich gibt es für jede der aktiven Antriebsspulen 4 einen solchen Stellgrößenregler RS. Der Stellgrößenregler RS kann als Software, mikroprozessorbasierte Hardware oder als integrierter oder analoger Schaltkreis ausgeführt sein. Der Stellgrößenregler RS könnte aber auch Teil der Leistungselektronik sein. Zusätzlich könnten in der Optimierung als optimale Stellgrößen $SG_{opt}$ auch optimale Spulenspannungen $v_{c,opt}$ ermittelt werden. Diese optimalen Spulenspannungen $v_{c,opt}$ könnten dann als Vorsteuerung des Stellgrößenreglers RS verwendet werden, wie in Fig.8 strichliert angedeutet. Dabei werden die optimalen Spulenspannungen $v_{c,opt}$ und die mit dem Stellgrößenregler RS ermittelten Spulenspannungen zur Stellgröße SG, die anzulegenden Spulenspannungen $v_c$, addiert. Auch in diesem Ausführungsbeispiel könnte analog zur Ausführung nach Fig.7 ein Bewegungsregler RB vorgesehen sein, um aus eine Bewegungssollgröße BS, beispielsweise einer Sollposition, die Antriebskraft $F_{xS}$ zu ermitteln.

Die Ausführung der Regelungseinheit 10 nach Fig.8 eignet sich insbesondere für eine offline Optimierung, könnte aber auch für eine online Optimierung verwendet werden.

Bei der offline Optimierung könnten vorab erstellte Bewegungskennfelder 12 verwendet werden, die die Antriebskraft $F_x$ (und/oder $F_y$, $F_z$) und eine Position x der Transporteinheit 3 relativ zu den Antriebsspulen 4 auf optimale Stellgrößen $SG_{opt}$, beispielsweise Spulenströme $i_{c,opt}$ und/oder Spulenspannungen $v_{c,opt}$, abbilden, wie oben bereits erläutert. Fig.9 zeigt beispielhaft ein solches Bewegungskennfeld 12, das die Position x der Transporteinheit 3 relativ zu einer Mehrzahl von aktiven Antriebsspulen 4 und eine Antriebskraft $F_x$ auf die Spulenströme $i_c$ der aktiven Antriebsspulen 4 abbildet. Dabei können natürlich Bewegungskennfelder 12 für verschieden definierte Gütefunktionale J(SG) verwendet werden, um die optimalen Stellgrößen $SG_{opt}$ in verschiedenen Bewegungsphasen zu ermitteln. Die Bewegungskennfelder 12 können in der Regelungseinheit 10 gespeichert sein, oder in externen Speichereinheiten. Zur Regelung der Bewegung der Transporteinheit 3 müssen dann nur mehr im richtigen Bewegungskennfeld die optimalen Stellgrößen $SG_{opt}$ ausgelesen werden. Hierfür ist sehr wenig Rechenkapazität erforderlich.

Die Bewegungskennfelder 12 können in Form von Tabellen abgespeichert werden. Zwischen den Tabelleneinträgen könnte dann interpoliert werden. Es ist aber auch möglich eine mathematische Funktion, beispielsweise ein Polynom bestimmter Ordnung, an die ermittelten Einträge in einem Bewegungskennfeld 12 anzupassen, beispielsweise durch ein Verfahren der Ausgleichsrechnung. In diesem Fall müsste für das Bewegungskennfeld 12 nur die bestimmte mathematische Funktion abgespeichert werden und eine Interpolation wäre nicht mehr erforderlich.

Für andere Bewegungsrichtungen, beispielsweise in y- oder z-Richtung, können natürlich äquivalente Regelungen realisiert werden.

Eine Variable eines Güteterms $JT_k(SG)$, beispielsweise $F_x(SG)$, $F_y(SG)$ oder $F_z(SG)$ in $(F_{xS} - F_x(SG))^2$,$(F_{yS} - F_y(SG))^2$,$(F_{zS} - F_z(SG))^2$, kann mit einem mathematischen Modell des Linearmotors 1 ermittelt werden. Dabei dient die Stellgröße SG als Eingangsgröße des Modells und die Variable ist eine Ausgangsgröße oder Zustandsgröße des Modells.

Die mathematische Modellierung des Linearmotors 1 für die Nebenbedingung g(SG) der Optimierung und/oder zur Ermittlung einer Variablen eines Güteterms $JT_k(SG)$ auf Basis physikalischer Gegebenheiten kann auf unterschiedliche Weisen erfolgen. Ein gängiges und hinreichend bekanntes Modell des Linearmotors 1 ist ein dq-Modell oder ein Finite Element (FEM) Modell.

Ein dq-Modell wird beispielsweise im eingangs genannten Dokument von *Khong, P.C., et al.* beschrieben, aber auch in Deng, Z., et al., "Forces and Parameters of Permanent Magnet Linear Synchronous Machines", IEEE Transaction of Magnetics, Vol. MAG-23, No. 1, Jan, 1987 oder in Kapitel 4 von Boldea, I., et al., "Linear Electric Actuators and Generators", Cambrige University Press, 1997. Das dq-Modell beschreibt den Zusammenhang zwischen den Strömen, Spannungen und magnetischen Flüssen im dq-Koordinatensystem und den Stellgrößen SG (Spulenströmen $i_c$ und Spulenspannungen $v_c$) und umfasst auch Gleichungen für die wirkenden Kräfte in Bewegungsrichtung x (Antriebskraft) und in Querrichtung y (Normalkraft), und auch anderer Kraft oder Momentenkomponenten.

Eine andere vorteilhafte Möglichkeit der Modellierung des Verhaltens des Linearmotors 1 ist durch ein Reluktanznetzwerk, mit dem der Zusammenhang zwischen Spulenströmen $i_c$ oder Spulenspannungen $v_c$ und den magnetischen Flüssen, sowie auch die erzeugten Antriebskräften, Vortriebskraft und/oder Normalkraft, und Antriebsmomenten, beschrieben werden kann. Der Vorteil der Modellierung mittels Reluktanznetzwerk liegt darin, dass alle Formen der Motorgrößen und nicht nur die sinusförmige Grundwellen berücksichtigt werden. Dadurch können auch nichtlineare Effekte wie zum Beispiel Sättigung aber auch Effekte wie eine Rastkraft (Cogging-Force) systematisch aber doch mit einer hinreichenden Abstrahierung, so dass die Modell auch online berechnet werden können, modelliert werden.

Die Verwendung eines Reluktanznetzwerk Modells des Linearmotors 1 zur Regelung der Bewegung einer Transporteinheit 3, auch mit anderen Regelungsmethoden als oben beschrieben, ist für sich neu und erfinderisch. Beispielsweise könnte das Reluktanznetzwerk Modell verwendet werden, um einen Beobachter zu erstellen, der Istwerte der magnetischen Flüsse und/oder der Kräfte zu schätzen, die dann in einer Regelung verwendet werden.

Ein Reluktanznetzwerk beschreibt den Linearmotor 1 als Netzwerk aus Reluktanzen R (magnetische Widerstände), Permeanzen G (magnetische Leitwerte) und magnetischen Spannungsquellen. Eine Reluktanz beschreibt bekanntermaßen den Zusammenhang zwischen einer magnetischen Spannung und einem magnetischen Fluss Φ. Die Permeanz G ist der Kehrwert der Reluktanz R. Die Reluktanz R eines magnetischen Leiters mit Länge l und Querschnitt A ist gegeben durch $R = \dfrac{l}{\mu_r \mu_0 A}$ , mit $\mu_0$ der Permeabilität von Vakuum und $\mu_r$ der relativen Permeabilität des Materials des magnetischen Leiters.

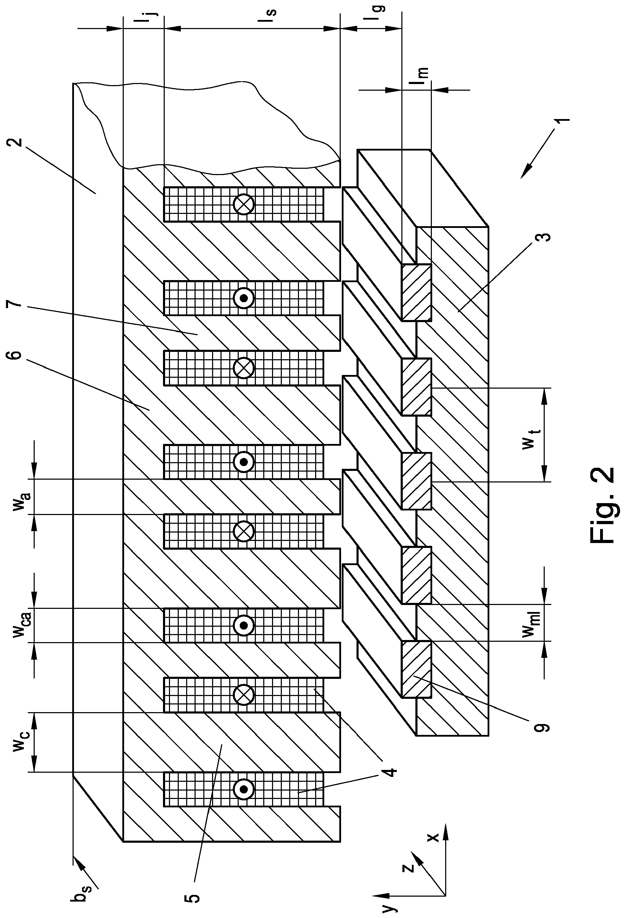

Die Modellierung mit einem Reluktanznetzwerk wird am Beispiel eines Langstatorlinearmotors als Linearmotor 1 anhand eines Aufbaus des Langstatorlinearmotors wie in Fig.2 gezeigt beschrieben. Bei anderen konstruktiven Aufbauten oder anderen Linearmotoren 1, wie bei einem Planarmotor, können sich entsprechende Änderungen im Reluktanznetzwerk und im Modell ergeben.

Der Stator 2 wird als Reluktanznetzwerk $RN_S$ mit i = 1, ..., n Zähnen (Statorzähne 5 und Nebenzähne 7) modelliert. Das müssen nicht alle am Stator 2 vorhandenen Zähne sein, sondern beispielsweise nur diejenigen Zähne, die mit der Transporteinheit 3 zusammenwirken. Üblicherweise wählt man eine Anzahl von Antriebsspulen 4, die zum Zwecke der Bewegung mit der Transporteinheit 3 bestromt werden. Daraus ergibt sich die Anzahl n an Zähnen, die mit dem Reluktanznetzwerk $RN_S$ modelliert werden. Auf den j = 1, ..., $n_c$ Statorzähnen 5, mit $n_c \leq n$, sind Antriebsspulen 4 angeordnet, zwischen denen die Nebenzähne 7 angeordnet sind. Im Falle keiner Nebenzähne 7, vereinfacht sich das Reluktanznetzwerk RNs entsprechend. Die verwendeten Abmessungen des Stators 2 und der Transporteinheit 3 sind in Fig.2 angegeben und können für einen Linearmotor 1 als bekannt vorausgesetzt werden.

Jeder Statorzahn 5 wird durch eine differentielle Reluktanz (Reluktanz pro Längeneinheit)

$$R'_c(\Phi_i) = \frac{1}{\mu_0 \mu_r(\Phi_i) A_c}$$

modelliert, mit der Querschnittsfläche $A_c = w_c \cdot b_s$ des Statorzahns 5.

Durch die nichtlineare Modellierung des Materials durch die vom magnetischen Fluss Φ abhängige relativen Permeabilität $\mu_r$ kann die magnetische Sättigung des Statorzahns 5 berücksichtigt werden. Analog wird jeder Nebenzahn

$$R'_a(\Phi_i) = \frac{1}{\mu_0 \mu_r(\Phi_i) A_a}$$

7 durch eine differentielle Reluktanz modelliert, mit der Querschnittsfläche $A_a = w_a \cdot b_s$ des Nebenzahns 5. Die Kopplung der Zähne durch den Zahnzwischenraum mit Breite $w_{ca}$ zwischen zwei benachbarten

$$G' = \frac{\mu_0 b_s}{w_{ca}}$$

Zähnen wird durch eine differentielle Permeanz modelliert. Die j Antriebsspulen 4 können als differentielle

$$u'_{c,j} = \frac{N_c}{l_s} i_{c,j}$$

magnetische Spannungen modelliert werden, wobei $N_c$ die Anzahl der Windungen der Antriebsspule 4 bezeichnet und $l_s$ die Länge des Zahns in y-Richtung(also quer zur Bewegungsrichtung x).

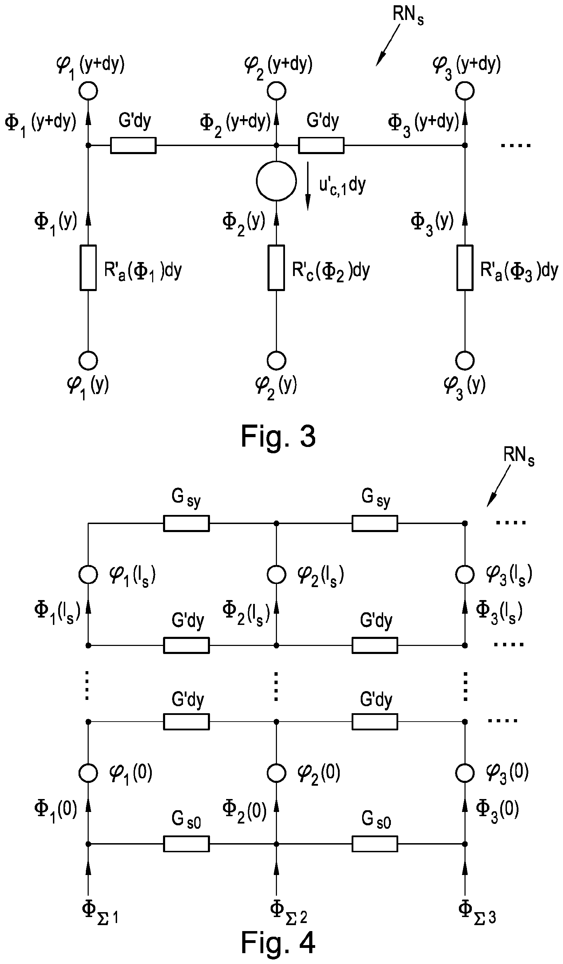

Ein differentieller Abschnitt dy des Stators 2 in y-Richtung kann dann mit einem Reluktanznetzwerk RNs des Stators 2 wie in Fig.3 dargestellt modelliert werden. Jeder Zahn bildet darin einen Ast des Reluktanznetzwerkes des Stators RNs, wobei die Äste durch die differentiellen Permeanzen G' verbunden sind, sodass sich Knoten des Reluktanznetzwerkes $RN_S$ ausbilden. Darin bezeichnen $\Phi_i(y)$ den magnetischen Fluss im i-ten Zahn (Statorzahn 5 oder Nebenzahn 7) und $\varphi_i(y)$ das magnetische Potential in y-Richtung entlang des i-ten Zahns.

Damit kann an jedem der n Knoten des Reluktanznetzwerk des Stators $RN_S$ eine Knotensumme der magnetischen Flüsse $\Phi_i(y)$ und des magnetischen Potentials $\Phi_i(y)$ entlang des Zahns in y-Richtung aufgestellt werden, was zu den folgenden 2n Gleichungssystemen als Systemgleichungen führt.

$$\Phi_1(y) - \Phi_1(y+dy) - G'dy\big(\varphi_1(y+dy) - \varphi_2(y+dy)\big) = 0$$

$$\Phi_2(y) - \Phi_2(y+dy) + G'dy\big(\varphi_1(y+dy) - \varphi_2(y+dy)\big) - G'dy\big(\varphi_2(y+dy) - \varphi_3(y+dy)\big) = 0$$

$$\vdots$$

$$\Phi_n(y) - \Phi_n(y+dy) - G'dy\big(\varphi_{n-1}(y+dy) - \varphi_n(y+dy)\big) = 0$$

$$\varphi_1(y) - \varphi_1(y + dy) - R'_a \, dy \Phi_1(y) = 0$$
$$\varphi_2(y) - \varphi_2(y + dy) - R'_c \, dy \Phi_2(y) + u'_{c,1} \, dy = 0$$
$$\vdots$$
$$\varphi_n(y) - \varphi_n(y + dy) - R'_a \, dy \Phi_n(y) = 0$$

Die lokale, differentielle Beschreibung der Fluss- bzw. Potentialgrößen ermöglicht es insbesondere, nicht zu vernachlässigende Streuflüsse im Zahnzwischenraum zu berücksichtigen.

Durch Division der Gleichungen mit dy und Berücksichtigung von dy→0 erhält man die Systemgleichungen

$$\frac{d}{dy}\begin{bmatrix}\Phi(y)\\\varphi(y)\end{bmatrix} = \begin{bmatrix}0 & A_1\\A_2(\Phi) & 0\end{bmatrix}\begin{bmatrix}\Phi(y)\\\varphi(y)\end{bmatrix} + \begin{bmatrix}0\\B\end{bmatrix}i_c .$$

In den Vektoren $\Phi(y)$ und $\varphi(y)$ sind die n magnetischen Flüsse und magnetischen Potentiale zusammengefasst, also $\Phi = [\Phi_1 \ \Phi_2 \ ... \ \Phi_n]^T$ und $\varphi = [\varphi_1 \ \varphi_2 \cdots \varphi_n]^T$. Die Systemmatrizen $A_1$ und $A_2$ ergeben sich zu

$$A_1 = \begin{bmatrix} -G' & G' & 0 & \dots & & & 0 \\ G' & -2G' & G' & \dots & & & 0 \\ 0 & G' & -2G' & G' & 0 & \dots & 0 \\ \vdots & & & & \ddots & & \vdots \\ 0 & \dots & & & \dots & 0 & G' & -G' \end{bmatrix}$$

und

$A_2(\Phi) = diag[-R'_a(\Phi_1),-R'_c(\Phi_2),...,-R'_a(\Phi_n)]$ (wobei diag eine Diagonalmatrix bezeichnet) und die Einaanasmatrix B eraibt sich zu

$$B = \frac{N_c}{l_s}\begin{bmatrix} 0 & 0 & \cdots & 0 \\ 1 & 0 & \cdots & 0 \\ 0 & 0 & \cdots & 0 \\ 0 & 1 & \cdots & 0 \\ \vdots & \vdots & \ddots & \vdots \\ 0 & 0 & \cdots & 0 \end{bmatrix}.$$

Um den Stator 2 komplett zu modellieren, ist noch der Abschluss bei $y = l_s$ (also das Statorjoch 6) und $y = 0$ (also beim Übergang zum Luftspalt) als Randbedingung zu modellieren, wie anhand von Fig.4 erläutert wird. Das Statorjoch 6 bei $y = l_s$ zwischen zwei benachbarten Zähnen wird mit einer linearen Permeanz $G_{sy}$ modelliert, mit

$$G_{sy} = \mu_0 \mu_{ry} \frac{2A_{sy}}{w_a + w_c + 2w_{ca}}$$

, worin $\mu_{ry}$ die als konstant angenommene relative Permeabilität des Statorjochs 6 und $A_{sy} = b_s \cdot l_j$ die Querschnittsfläche des Statorjochs 6 ist. Bei $y = 0$ sind die Zähne durch Leckagepermeanzen $G_{s0}$ gekoppelt,

$$G_{s0} = \frac{\mu_0 b_s}{\pi} \ln\left(\frac{2l_g}{w_{ca}}\right)$$

die beispielsweise mit modelliert werden können. Die linearen Permeanzen $G_{sy}$ und die Leckagepermeanzen $G_{s0}$ verbinden wieder die Äste des Reluktanznetzwerkes des Stators RNs unter Ausbildung weiterer Knoten im Reluktanznetzwerk des Stators RNs. Der magnetische Fluss $\Phi_\Sigma = [\Phi_{\Sigma 1} \ \Phi_{\Sigma 2} \cdots \Phi_{\Sigma n}]^T$ bezeichnet den magnetischen Fluss der Antriebsmagnete 9 der Transporteinheit 3, der in die Zähne des Stators 2 fließt, also der magnetische Fluss im Luftspalt.

Mit derselben Vorgehensweise wie oben beschrieben erhält man als Randbedingungen für y = $l_s$ und y = 0

$$\Phi(l_s) + G_{sy} T_L^\varphi \varphi(l_s) = 0$$

wieder Gleichungssysteme $\Phi(0) + \Phi_\Sigma + G_{s0} T_L^\varphi \varphi(0) = 0$ mit der Matrix

$$T_L^\varphi = \begin{bmatrix} -1 & 1 & 0 & \ldots & & & 0 \\ 1 & -2 & 1 & \ldots & & & 0 \\ 0 & 1 & -2 & 1 & 0 & \ldots & 0 \\ \vdots & & & \ddots & & & \vdots \\ 0 & \ldots & & & 0 & 1 & -1 \end{bmatrix}$$

, die die Systemgleichungen ergänzen.

Wenn das Material der Zähne des Stators 2 als magnetisch linear angenommen wird, fällt die Abhängigkeit der Reluktanzen R'$_a$ und R'$_c$ vom magnetischen Fluss $\Phi$ weg und es kann eine analytische Lösung für die obigen Differential Systemgleichungen angegeben werden.

Die verketteten Flüsse $\psi_c = [\psi_{c1} \ \psi_{c2} \cdots \psi_{cnc}]^T$ in den j = 1, ..., n$_c$ Statorzähnen 5 des Stators 2 ergeben sich

dann zu $\psi_c = \dfrac{N_c}{l_s} \int_0^{l_s} T_c^\psi \Phi(y) dy$ . Die Matrix $T_c^\psi = \begin{bmatrix} e_2 & e_4 & \cdots & e_{n-1} \end{bmatrix}^T$ mit den i-ten Einheitsvektoren e$_i$ wählt im Integral die für jeden Statorzahn 5 zugehörigen magnetischen Flüsse in $\Phi(y)$ aus.

Wenn das Material hingegen nichtlinear ist und magnetische Sättigung eintritt, dann ist eine analytische Lösung nicht möglich. In diesem Fall können Näherungsverfahren zur Lösung der Differentialgleichungen der Systemgleichungen zur Anwendung kommen.

Beispielsweise könnte der i-te magnetische Fluss $\Phi_i$ und das i-te magnetische Potential $\varphi_i$ in den Zähnen mittels Näherungspolynome g$_j$(y) mit den Koeffizienten $\hat{\Phi}_{ij}$ und $\hat{\varphi}_{ij}$ über eine Anzahl N von Stützstellen entlang der Länge l$_s$ (in y-Richtung) der Zähne angenähert werden, in der Form

$$\Phi_i(y) \approx \sum_{j=0}^N \hat{\Phi}_{ij} g_j(y) = g^T(y) \hat{\Phi}_i$$

$$\varphi_i(y) \approx \sum_{j=0}^N \hat{\varphi}_{ij} g_j(y) = g^T(y) \hat{\varphi}_i$$

.

Durch geeignete Wahl der Näherungspolynome g;(y) kann das System der nichtlinearen Differentialgleichungen in den Systemgleichungen in ein System nichtlinearer algebraischer Gleichungen transformiert werden, das gelöst werden kann. Eine mögliche Wahl der Näherungspolynome g$_j$(y) sind Lagrange Interpolationspolynome der Form

$$g_j(y) = \prod_{k=0, k\neq j}^N \frac{y - y_k}{y_j - y_k}$$

mit j = 0, ..., N. Die Transformation ergibt sich durch Differentiation der Näherungspolynome g$_j$(y) nach y und Auswerten an den N Stützstellen. Damit erhält man eine konstante Differentiationsmatrix D aus

$$\frac{d}{dy} g^T(y) \hat{\Phi}_i = D\hat{\Phi}_i \qquad \frac{d}{dy} g^T(y) \hat{\varphi}_i = D\hat{\varphi}_i \qquad d_{ij} = \left( \frac{d}{dy} g_j(y) \right)_{y=y_i}$$

bzw. .Die Matrix D besitzt somit die Einträge .
Das System nichtlinearer algebraischer Gleichungen als Systemgleichungen folgt dann zu

$$\begin{bmatrix} \tilde{D} & 0 \\ 0 & \tilde{D} \end{bmatrix} \begin{bmatrix} \hat{\Phi} \\ \hat{\varphi} \end{bmatrix} - \begin{bmatrix} 0 & \tilde{A}_1 \\ \tilde{A}_2(\hat{\Phi}) & 0 \end{bmatrix} \begin{bmatrix} \hat{\Phi} \\ \hat{\varphi} \end{bmatrix} + \begin{bmatrix} 0 \\ \tilde{B} \end{bmatrix} i_c = 0$$

Mit 15 = *diag* [$D\,D \cdots D$], $\hat{\Phi} = [\hat{\Phi}_1\ \hat{\Phi}_2 \cdots \hat{\Phi}_n]$ und $\hat{\varphi} = [\hat{\varphi}_1\ \hat{\varphi}_2 \cdots \hat{\varphi}_n]$. Die transformierten Systemmatrizen ergeben sich zu

$$\tilde{A}_2(\hat{\Phi}) = -diag\left[\ \hat{R}_a(\hat{\Phi}_1)\quad \hat{R}_c(\hat{\Phi}_2)\quad \cdots \quad \hat{R}_a(\hat{\Phi}_n)\ \right]$$

mit

$$\tilde{R}_a(\hat{\Phi}_i) = -diag\left[\ R'_a(\hat{\Phi}_{i1})\quad R'_a(\hat{\Phi}_{i2})\quad \cdots \quad R'_a(\hat{\Phi}_{iN})\ \right]$$

und
$\tilde{R}_c(\hat{\Phi}_i) = -diag[R'_c(\hat{\Phi}_{i1})\ R'_c(\hat{\Phi}_{i2}) \cdots R'_c(\hat{\Phi}_{iN})]$, sowie $\tilde{A}_1 = A_1 \otimes I$ mit der Einheitsmatrix I und $\tilde{B} = B \otimes 1$ mit $1 = [1\ 1 \cdots 1]^T$ und dem Kronecker Produkt $\otimes$.

Auch die Gleichungen für die Ränder können in der Art transformiert werden, woraus sich die transformierten Gleichungen

$$T_L\hat{\Phi} + G_{sy}T_L^{\varphi}T_L\hat{\varphi} = 0$$

$$-T_0\hat{\Phi} + \Phi_{\Sigma} + G_{s0}T_L^{\varphi}T_0\hat{\varphi} = 0$$

ergeben, mit den Auswahlmatrizen $T_L$ und $T_0$, die die Einträge von $\hat{\Phi}$ und $\hat{\varphi}$ an den Rand Stützpunkten ($y = 0$ und $I_s$) auswählen.

Damit kann auch eine Näherung der verketteten Flüsse $\psi_c = [\psi_{c1}\ \psi_{c2} \cdots \psi_{cR_c}]^T$ in Abhängigkeit von den angenäherten magnetischen Flüssen $\Phi$ angegeben werden, was allgemein als $\psi_c = W\Phi$ angegeben werden kann, wobei sich die Matrix W aus der Wahl der Näherungspolynome g;(y) und der N Stützpunkte ergibt.

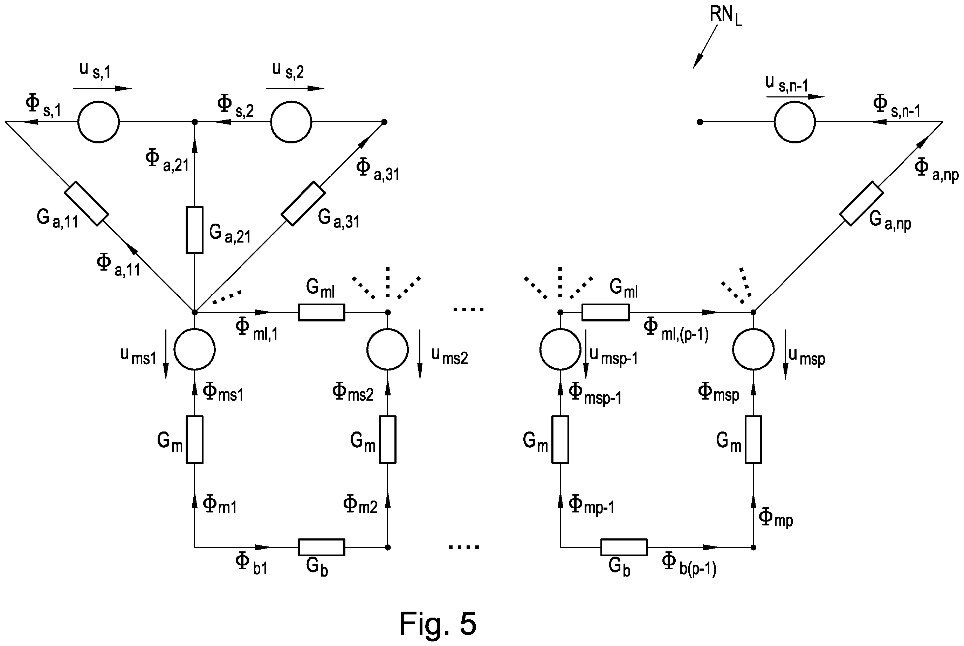

Um den von den Antriebsmagneten 9 der Transporteinheit 3 im Luftspalt erzeugten magnetischen Fluss zu bestimmen, wird auch der Luftspalt und die Transporteinheit 3 mit einem Reluktanznetzwerk des Läufers $RN_L$ modelliert, wie anhand Fig.5 erläutert wird.

Die Transporteinheit 3 ist durch Luftspaltpermeanzen $G_{a,ij}$, mit dem Index $i = 1, ..., n$ für die Anzahl der Zähne und dem Index $j = 1, ..., p$ für die Anzahl der Antriebsmagnete 9 an der Transporteinheit 3, mit dem Stator 2 gekoppelt. Der Stator 2 ist durch die magnetischen Spannungen $u_s = [u_{s,1}\ u_{s,2} \cdots u_{s,n-1}]^T$ repräsentiert, die sich aus den magnetischen Potentialen $\varphi$ am Rand des Stators 2 bei $y = 0$ ergeben. Mit der oben erläuterten Näherung ergeben sich die magnetischen Spannungen beispielsweise aus $u_s = T_s^{\varphi}T_0\hat{\varphi}$ mit der Matrix

$$T_s^{\varphi} = \begin{bmatrix} 1 & -1 & 0 & \cdots & & 0 \\ 0 & 1 & -1 & 0 & & 0 \\ \vdots & & & \ddots & \ddots & \vdots \\ 0 & \vdots & & 0 & 1 & -1 \end{bmatrix}$$

und der oben erläuterten Auswahlmatrix $T_0$.

Die Antriebsmagnete 9 sind beispielsweise Permanentmagnete, die durch Spannungsquellen mit konstanten magnetischen Spannungen $u_{msj} = H_c I_m$, mit der Dicke $I_m$ der Permanentmagnete und der für die verwendeten Permanentmagnete bekannten magnetische Koerzitivfeldstärke $H_c$, und einer linearen Permeanz $G_m = \dfrac{A_m \mu_0 \mu_{rm}}{I_m}$ beschrieben werden, wobei $A_m$ die bekannte Querschnittsfläche der Permanentmagnete ist und $\mu_{rm}$ die bekannte konstante relative Permeabilität der Permanentmagnete. Für andere Antriebsmagnete 9 kann ein anderes Modell, auch mit nicht konstanten magnetischen Spannungen, verwendet werden. Das die Antriebsmagnete 9 verbindende Magnetjoch an

$$G_b = \frac{A_t \mu_0 \mu_{rt}}{w_t}$$

der Transporteinheit 3 wird mit einer linearen Permeanz $G_b = \frac{A_t \mu_0 \mu_{rt}}{w_t}$ beschrieben, mit der bekannten Querschnittsfläche $A_t$ und der bekannten konstanten relativen Permabilität $\mu_{rt}$ und dem Abstand $w_t$ zwischen zwei Antriebsmagneten 9 (beispielsweise Mitte-Mitte wie in Fig.2). Der Leckagefluss an der dem Stator 2 zugewandten Seite der Transporteinheit

$$G_{ml} = \frac{\mu_0 b_s}{\pi} \ln\left(\frac{2 l_g}{w_{ml}}\right)$$

3 wird durch Leckagepermeanzen $G_{ml} = \frac{\mu_0 b_s}{\pi} \ln\left(\frac{2 l_g}{w_{ml}}\right)$ beschrieben, mit der Breite $w_{ml}$ des Zwischenraumes zwischen zwei Antriebsmagneten 9. Jeder Antriebsmagnet 9 bildet demnach Äste des Reluktanznetzwerkes des Läufers $RN_L$ mit der linearen Permanz $G_m$ und mit der magnetischen Spannung $u_{msj}$ einer magnetischen Spannungsquelle, die an den Enden der Äste durch die Leckagepermanzen $G_{ml}$ am Luftspalt und den linearen Permanzen am Magnetjoch unter Ausbildung von Knoten des Reluktanznetzwerkes des Läufers $RN_L$ verbunden sind.

An den Knoten am Luftspalt schließen weitere Äste des Reluktanznetzwerkes des Läufers $RN_L$ an, in denen Luftspaltpermeanzen $G_{a,ij}$ angeordnet sind. Jeder der p Antriebsmagnete 9 ist über jeweils eine Luftspaltpermeanz $G_{a,ij}$ mit jedem der n berücksichtigten Zähnen im Reluktanznetzwerk des Statorts $RN_S$ verbunden. Die Äste mit den Luftspaltpermeanzen $G_{a,ij}$ sind jeweils unter Ausbildung von weiteren Knoten des Reluktanznetzwerkes des Läufers $RN_L$ durch Spannungsquellen mit den magnetischen Spannungen $u_s$, die den Stator 2 repräsentieren, verbunden.

Die Luftspaltpermeanzen $G_{a,ij}(x_s, y_s)$, die die magnetische Kopplung zwischen Stator 2 und Transporteinheit 3 beschreiben, sind abhängig von der Position $x_s$, $y_s$ der Transporteinheit 3 in Bewegungsrichtung x und in Querrichtung y relativ zum Stator 2. Jeder Antriebsmagnet 9 ist mit jedem betrachteten Zahn des Stators 2 magnetisch gekoppelt, oder anders ausgedrückt trägt jeder Antriebsmagnet 9 zum in einen Zahn fließenden magnetischen Fluss $\Phi_\Sigma$ bei. Die Luftspaltpermeanzen $G_{a,ij}(x_s, y_s)$ können als bekannt vorausgesetzt werden, beispielsweise indem diese vorab messtechnisch oder aus Simulationsrechnungen ermittelt werden. Dazu ist es lediglich erforderlich die Luftspaltpermeanzen $G_{a,ij}(x_s, y_s)$ eines Antriebsmagneten 9 in Abhängigkeit der Position $x_s$, $y_s$ relativ zu einem Statorzahn 5 zu ermitteln. Falls Nebenzähne 7 verwendet werden, dann auch relativ zu einem Nebenzahn 7. Die Luftspaltpermeanzen $G_{a,ij}(x_s, y_s)$ können dann beispielsweise in Tabellenform, als mathematische Formel oder als Kennfelder in der Regelungseinheit 10 hinterlegt sein.

Es wäre auch möglich, die magnetische Kopplung zwischen zwei benachbarten Transporteinheiten 3 im Reluktanznetzwerk des Läufers $RN_L$ abzubilden. Damit würde durch die Regelung auch eine derartige Abhängigkeit berücksichtigt werden.

Um aus dem magnetischen Reluktanznetzwerk $RN_L$ des Luftspaltes und der Transporteinheit 3 ein Gleichungssystem aus unabhängigen Gleichungen abzuleiten kann auf unterschiedliche Weise vorgegangen werden. Als möglicher Ansatz bietet sich die Verwendung der hinlänglich bekannten Graphentheorie an, wie nachfolgend beispielhaft erläutert wird. Die Verwendung der Graphentheorie ist vorteilhaft, weil diese eine Systematik zum Aufstellen und Lösen der Gleichungen nach den unabhängigen Variablen bietet.

Die Topologie des Reluktanznetzwerkes des Läufers $RN_L$ (Fig.5) wird in einen Baum und einen Ko-Baum unterteilt. Dabei verbindet das Netzwerk des Baumes alle Knoten ohne eine Masche (ein über Äste geschlossener Umlauf) zu bilden und der Ko-Baum umfasst alle Elemente welche nicht Teil des Baumes sind. Die Wahl des Baumes ist im Wesentlichen frei, wobei sich jedoch vorzugsweise alle magnetischen Spannungsquellen im Baum befinden. Eine geeignete Wahl ist beispielsweise die Zusammenfassung aller Luftspaltpermeanzen $G_{a,ij}(x_s,y_s)$ bis auf die letzte Luftspaltpermeanz $G_{a,np}$ und den Leckagepermeanzen $G_{ml}$ im Ko-Baum. Die magnetischen Flüsse $\Phi_t$ des Baumes und $\Phi_c$ des

Ko-Baumes können dann in den Vektoren $\Phi_t^T = \begin{bmatrix} \Phi_{ts}^T & \Phi_{tm}^T & \Phi_{tg}^T \end{bmatrix}$ und

$\Phi_c^T = \begin{bmatrix} \Phi_{a,11} & \cdots & \Phi_{a,(n-1)p} & \Phi_{ml1} & \cdots & \Phi_{ml(p-1)} \end{bmatrix}$ zusammengefasst werden. Die Baumelemente können aufgeteilt werden auf die magnetischen Spannungsquellen des Stators 2 mit Index ts, den magnetischen Spannungsquellen der Antriebsmagnete 9 mit Index tm und den Permeanzen im Baum mit Index tg. Folglich ergeben sich die Teilvektoren

der magnetischen Flüsse $\Phi_{ts}^T = \begin{bmatrix} \Phi_{s,1} & \Phi_{s,2} & \cdots & \Phi_{s,n-1} \end{bmatrix}$, $\Phi_{tm}^T = \begin{bmatrix} \Phi_{ms1} & \Phi_{ms2} & \cdots & \Phi_{msp} \end{bmatrix}$,

$\Phi_{tg}^T = \begin{bmatrix} \Phi_{m1} & \cdots & \Phi_{mp} & \Phi_{b1} & \cdots & \Phi_{b(p-1)} & \Phi_{a,np} \end{bmatrix}$. In analoger Weise ergibt sich der Vektor der magnetischen Spannungen $u_t$ des Baumes und der magnetischen Spannungen des Ko-Baumes $u_c$, mit den Vektoren der magnetischen Spannungen
$$u_{ts}^T = [u_{s,1}, u_{s,2}, \ldots, u_{s,n-1}], u_{tm}^T = [u_{ms1}, u_{ms2}, \ldots, u_{msp}]$$
und

$$u_{tg}^T = [u_{m1}, \ldots, u_{mp}, u_{b1}, \ldots, u_{b(p-1)}, u_{a,np}]$$
, sowie $u_c^T = [u_{a,11}, \ldots, u_{a,(n-1)p}, u_{ml1}, \ldots, u_{ml(p-1)}]$. Die magnetischen Flüsse und Spannungen des Baumes und des Ko-Baumes sind über die Matrix V in der Form $\Phi_t = V\Phi_c$ und $u_c = -V^T u_t$ verknüpft, wobei sich die Matrix V aus der Topologie des Reluktanznetzwerkes $RN_L$ und der Aufteilung in Baum und Ko-Baum ergibt. Die Matrix V kann gemäß der obigen Aufteilung wieder aufgeteilt werden in $V^T = \begin{bmatrix} V_s^T & V_m^T & V_g^T \end{bmatrix}$. Die Matrix V ist abhängig von der gewählten Anzahl der Statorzahnelemente.

Die Matrix $V_s$ lässt sich für $n_c$ Antriebspulen 4 (und damit $n = 2n_c + 1$ Zähnen) darstellen als $V_s = [V_{s1}, 0, V_{s2}, 0, V_{s3}, 0, V_{s4}, 0, V_{s5}, 0, 0, 0, 0]$, wobei die Elemente 0 Nullvektoren beschreiben und $V_{sj}, j = 1, \ldots, 5$, untere Dreiecksmatrizen mit der Dimension $\dim(V_{sj}) = (n - 1) \times (n - 1)$ sind und alle Einträge dieser Dreiecksmatrix 1 sind.

Die Matrix $V_m$ ergibt sich beispielsweise für fünf Antriebsmagnete 8 (p=5) zu $V_m = [V_{m1}, V_{m2}, V_{m3}, V_{m4}, 0, \ldots, 0, V_{ml}]$, mit den Teilmatrizen der Dimension $\dim(V_{mj}) = p \times n, j = 1, \ldots, p - 1$. Diese Teilmatrizen ergeben sich beispielsweise zu

$$V_{m1} = \begin{bmatrix} 1 & \cdots & 1 \\ 0 & \cdots & 0 \\ 0 & \cdots & 0 \\ 0 & \cdots & 0 \\ -1 & \cdots & -1 \end{bmatrix},$$

$$V_{m2} = \begin{bmatrix} 0 & \cdots & 0 \\ -1 & \cdots & -1 \\ 0 & \cdots & 0 \\ 0 & \cdots & 0 \\ -1 & \cdots & -1 \end{bmatrix}, V_{m3} = \begin{bmatrix} 0 & \cdots & 0 \\ 0 & \cdots & 0 \\ 1 & \cdots & 1 \\ 0 & \cdots & 0 \\ -1 & \cdots & -1 \end{bmatrix}, V_{m1} = \begin{bmatrix} 0 & \cdots & 0 \\ 0 & \cdots & 0 \\ 0 & \cdots & 0 \\ -1 & \cdots & -1 \\ -1 & \cdots & -1 \end{bmatrix}, V_{ml} = \begin{bmatrix} 1 & 0 & 0 & 0 \\ 1 & -1 & 0 & 0 \\ 0 & -1 & 1 & 0 \\ 0 & 0 & 1 & -1 \\ 0 & 0 & 0 & -1 \end{bmatrix}.$$

Aus den Verknüpfungen der magnetischen Flüsse und Spannungen des Baumes und des Ko-Baumes folgt auch die Matrix $V_g$, wobei diese Matrix wiederum 0, 1 enthält.

Der magnetische Fluss $\Phi$ und die magnetischen Spannungen u sind zudem noch verknüpft über die Permeanzen in der Form $\Phi_{tg} = G_t u_{tg}$ und $\Phi_c = G_c u_c$ mit den Permeanzmatrizen des Baumes $G_t = diag[G_m \cdots G_m \, G_b \cdots G_b \, G_{a,np}]$ und des Ko-Baumes $G_c = diag[G_{a,11} \cdots G_{a,(n-1)p} \, G_{ml} \cdots G_{ml}]$.

Um die Systemgleichungen für das gesamte Reluktanznetzwerk RN ($RN_S + RN_L$) zu erhalten, wird der magnetische Fluss $\Phi_\Sigma$ in der obigen Randbedingung am Rand bei y = 0 durch die magnetischen Flüsse im Luftspalt ausge-

$$-T_0 \hat{\Phi} + \underbrace{T_c^\Phi \Phi_c + T_t^\Phi \Phi_{tg}}_{\Phi_\Sigma} + G_{s0} T_L^\varphi T_0 \hat{\varphi} = 0$$

drückt, was zu führt. Die Matrizen $T_c^\Phi$ und $T_t^\Phi$ wählen die Luftspalt Flüsse für jeden der n Zähne aus und summieren diese. Beispielsweise ergibt sich $\Phi_{\Sigma1} = \sum_{j=1}^p \Phi_{a,1j}$.

Die obigen Gleichungen, die sich aus dem Reluktanznetzwerk des Stators RNs und dem Reluktanznetzwerk des Läufers $RN_L$ ergeben, können zusammengeführt werden, woraus sich die Gesamtsystemgleichungen des gesamten Reluktanznetzwerkes RN in der Form eines Gleichungssystems $K(x)x-B(i_c) = 0$ darstellen lässt. Dieses Gleichungssystem stellt das Modell des Linearmotors 1 dar und kann als Nebenbedingung g(SG,x) mit SG=$i_c$ und dem Zustandsvektor x oder für die Ermittlung einer Variablen eines Güteterms $JT_k(SG)$ des Gütefunktionals J(SG) verwendet werden. Diese Darstellung kann für eine beliebige Topologie des Reluktanznetzwerkes RN angegeben werden.

Für das Ausführungsbeispiel nach den Fig.3, 4 und 5 ergeben sich der Zustandsvektor mit den Zustandsgrößen

$$x^T = \begin{bmatrix} \hat{\Phi}^T & \hat{\varphi}^T & u_{tg}^T & \psi_c^T \end{bmatrix}$$
und die Gesamtsystemmatrix

$$K(x) = \begin{bmatrix} \tilde{D} & -\tilde{A}_1 & 0 & 0 \\ -\tilde{A}_2\left(\hat{\Phi}\right) & \tilde{D} & 0 & 0 \\ T_0 & \left(T_c^{\Phi}G_cV_s^T T_s^{\varphi} - G_{s0}T_L^{\varphi}\right)T_0 & -\left(T_t^{\Phi}G_t - T_c^{\Phi}G_cV_g^T\right) & 0 \\ T_L & G_{sy}T_L^{\varphi}T_L & 0 & 0 \\ 0 & V_gG_cV_s^T T_s^{\varphi}T_0 & G_t + V_gG_cV_g^T & 0 \\ W & 0 & 0 & I \end{bmatrix}.$$

Der Eingangsvektor folgt

$$\text{zu } B(i_c) = \begin{bmatrix} 0 \\ \tilde{B}i_c \\ -T_c^{\Phi}G_cV_m^T u_{tm} \\ 0 \\ -V_gG_cV_m^T u_{tm} \\ 0 \end{bmatrix}.$$

Um ein wohldefiniertes Gleichungssystem zu erhalten kann in den Gesamtsystemgleichungen noch eine Zeile [0 0 ⋯ 1] $\hat{\varphi} = e_{\varphi}^T \hat{\varphi} = 0$ , mit der $\hat{\varphi}_{n(N+1)}$ = 0 festgelegt wird, ergänzt werden.

Damit können mit dem Modell alle Systemgrößen berechnet werden, insbesondere die verketteten magnetischen Flüsse $\psi_c$ der Antriebsspulen 4 als Funktion der Spulenströme $i_c$. Das Gesamtsystemgleichungssystem kann auch einfach umgewandelt werden, sodass die Antriebsströme $i_c$ als Funktion der magnetischen Flüsse $\psi_c$ ermittelt werden.

Üblicherweise werden bei einem Linearmotor die Spulenspannungen $v_c$ als Eingangsgröße verwendet, indem mittels der Leistungselektronik die Spulenspannungen $v_c$ erzeugt und an die Antriebsspule angelegt werden. Unter Verwendung des bekannten Induktionsgesetzes $\dfrac{d\psi_c}{dt} = L\dfrac{di_c}{dt} = -R_ci_c + v_c$ , mit dem bekannten ohmschen Widerstand $R_c$ und der bekannten Induktivität L der Antriebsspulen 4, kann aus dem Spulenstrom $i_c$ die Spulenspannung $v_c$ und umgekehrt ermittelt werden.

Aus den Systemgleichungen des Reluktanznetzerkes RN, beispielsweise unter Anwendung des bekannten Prinzips der magnetischen Koenergie, lassen sich noch die Antriebskräfte und/oder Antriebsmomente, beispielsweise die Vortriebskraft $F_x$ und die Normalkraft $F_y$ in der Form

$$F_x = \frac{1}{2}u_{tg}^T\frac{\partial G_t}{\partial x_s}u_{tg} + \frac{1}{2}u_c^T\frac{\partial G_c}{\partial x_s}u_c$$
$$F_y = \frac{1}{2}u_{tg}^T\frac{\partial G_t}{\partial y_s}u_{tg} + \frac{1}{2}u_c^T\frac{\partial G_c}{\partial y_s}u_c ,$$

ableiten. Damit lassen sich auch die auf die Transporteinheit 3 wirkenden Antriebskräfte, und auch Antriebsmomente, in Abhängigkeit von der Relativposition [$x_s$, $y_s$] der Transporteinheit 3 relativ zum Stator 2 bestimmen. Die Antriebskräfte und Antriebsmomente können das Modell des Langstatorlinearmotors als Linearmotor 1 ergänzen.

Das beschriebene Reluktanzmodell für den Langstatorlinearmotors kann natürlich auf den Fall eines Planarmotors als Linearmotor 1 erweitert werden.

**Patentansprüche**

1. Verfahren zum Betreiben eines Linearmotors (1) mit einem Stator (2), an dem eine Mehrzahl von Antriebsspulen (4) angeordnet sind, und mit einer entlang des Stators (2) bewegten Transporteinheit (3), an der eine Mehrzahl von Antriebsmagnete (9) angeordnet sind, wobei durch das Bestromen von aktiven Antriebsspulen (4) im Bereich der Antriebsmagnete (9) der Transporteinheit (3) ein elektromagnetisches Feld erzeugt wird, das zum Bewegen der Transporteinheit (3) mit den Antriebsmagneten (9) der Transporteinheit (3) zusammenwirkt, wobei ein Gütefunktional J(SG) als Funktion von Stellgrößen (SG) der aktiven Antriebsspulen (4) verwendet wird, wobei das Gütefunktional J(SG) eine Summe einer Anzahl $k \geq 1$ von mit Gewichtungsfaktoren $k_k$ gewichteten Gütetermen $JT_k(SG)$, die von den Stellgrößen abhängig sind, enthält, wobei das Gütefunktional J(SG) einen Güteterm $JT_k(SG)$ enthält, der eine Abweichung einer vorgegebenen Bewegungssollgröße (BS) der Regelung der Bewegung der Transporteinheit (3) von einer von der Stellgröße (SG) abhängigen Istgröße (IS) der Regelung bewertet, wobei das Gütefunktional J(SG) zur Regelung der Bewegung der Transporteinheit (3) entlang des Stators (2) hinsichtlich der Stellgrößen (SG) optimiert wird, um für den jeweiligen Zeitschritt der Regelung der Bewegung optimale Stellgrößen ($SG_{opt}$) zu ermitteln und die aktiven Antriebsspulen (9) gemäß den ermittelten optimalen Stellgrößen ($SG_{opt}$) bestromt werden, **dadurch gekennzeichnet, dass** während der Bewegung der Transporteinheit (3) entlang des Stators (2) zumindest zwei Bewegungsphasen vorgesehen sind, wobei in den zumindest zwei Bewegungsphasen unterschiedliche Gütefunktionale J(SG) für die Ermittlung der optimalen Stellgrößen ($SG_{opt}$) verwendet werden, wobei sich die unterschiedlichen Gütefunktionale J(SG) durch die Anzahl k der verwendeten Güteterme $JT_k(SG)$ und/oder durch die Güteterme $JT_k(SG)$ und/oder durch die Gewichtungsfaktoren $k_k$ unterscheiden.

2. Verfahren nach Anspruch 1, **dadurch gekennzeichnet, dass** das Gütefunktional J(SG) online während der Bewegung der Transporteinheit (3) in jedem Zeitschritt der Regelung optimiert wird, um die im jeweiligen Zeitschritt der Regelung der Bewegung optimale Stellgrößen ($SG_{opt}$) zu ermitteln.

3. Verfahren nach Anspruch 1, **dadurch gekennzeichnet, dass** das Gütefunktional J(SG) für eine vorgegebene Bewegung der Transporteinheit (3) entlang des Stators (2) offline optimiert wird, um die während der Durchführung der Bewegung einzustellenden optimalen Stellgrößen ($SG_{opt}$) vorab zu berechnen.

4. Verfahren nach Anspruch 1, **dadurch gekennzeichnet, dass** für die verschiedenen Gütefunktionale J(SG) der zumindest zwei Bewegungsphasen durch offline Optimierung Bewegungskennfelder (12) vorab erstellt werden, die eine Bewegungssollgröße (BS) und eine Position der Transporteinheit (3) relativ zu den aktiven Antriebsspulen (4) auf optimale Stellgrößen ($SG_{opt}$) abbilden, **und dass** während der Durchführung der Bewegung der Transporteinheit (3) aus einem Bewegungskennfeld (12) anhand einer ermittelten Istposition der Transporteinheit (3) relativ zu den aktiven Antriebsspulen (4) und einem vorgegebenen Sollwert der Bewegungssollgröße (BS) die zugehörigen optimalen Stellgrößen ($SG_{opt}$) ausgelesen werden.

5. Verfahren nach einem der Ansprüche 1 bis 4, **dadurch gekennzeichnet, dass** die optimalen Stellgrößen ($SG_{opt}$) in einem Stellgrößenregler eingeregelt werden.

6. Verfahren nach einem der Ansprüche 1 bis 5, **dadurch gekennzeichnet, dass** das Gütefunktional J(SG) einen Güteterm $JT_k(SG)$ enthält, der die elektrische Leistung bewertet, die für die Bewegung der Transporteinheit (3) benötigt wird.

7. Verfahren nach Anspruch 6, **dadurch gekennzeichnet, dass** als Güteterm $JT_k(SG)$ das Quadrat der euklidischen Norm eines Vektors mit den Stellgrößen (SG) der bestromten Antriebsspulen (4) verwendet wird, also

$$JT_k(SG) = k_i \cdot \left\| SG \right\|_2^2 \,.$$

8. Verfahren nach einem der Ansprüche 1 bis 5, **dadurch gekennzeichnet, dass** das Gütefunktional J(SG) einen Güteterm $JT_k(SG)$ der Form $JT_k(SG) = k_e(BS - IS(SG))^2$ oder $JT_k(SG) = k_e(BS - IS(SG))$ enthält.

9. Verfahren nach einem der Ansprüche 1 bis 5, **dadurch gekennzeichnet, dass** das Gütefunktional J(SG) einen Güteterm $JT_k(SG)$ enthält, der eine Summe $SG_\Sigma$ der Stellgrößen (SG) bewertet, vorzugsweise als Quadrat der Summe, also $JT_k(SG) = k_\Sigma SG_\Sigma^2$ oder $JT_k(SG) = k_\Sigma SG_\Sigma$.

10. Verfahren nach einem der Ansprüche 1 bis 9, **dadurch gekennzeichnet, dass** ein Güteterm $JT_k(SG)$ eine Variable

enthält, die mit einem mathematischen Modell des Linearmotors (1) ermittelt wird.

11. Verfahren nach einem der Ansprüche 1 bis 9, **dadurch gekennzeichnet, dass** bei der Optimierung eine Nebenbedingung g(SG) in Form eines mathematischen Modells des Linearmotors (1) berücksichtig wird.

12. Verfahren nach Anspruch 10 oder 11 , **dadurch gekennzeichnet, dass** der Linearmotor (1) mit einem Reluktanznetzwerk (RN) als Netzwerk mit Ästen, in denen Reluktanzen R, Permeanzen G oder magnetische Spannungsquellen angeordnet sind und in denen magnetische Flüsse $\Phi$ fließen, modelliert wird.

13. Verfahren nach Anspruch 12, **dadurch gekennzeichnet, dass** der Stator (2) des Linearmotors (1) mit einer Anzahl n von Zähnen, die durch ein Statorjoch (6) verbunden sind, modelliert wird, **dass** ein differentieller Abschnitt dy jeder der Anzahl n von Zähnen durch einen Ast des Reluktanznetzwerkes des Stators ($RN_S$) mit einer differentiellen Reluktanz $R'_a(\Phi_i)$, $R'_c(\Phi_i)$ und im Fall einer Antriebsspule auf einem der Anzahl von Zähne mit einer magnetischen Spannungsquelle mit einer differentiellen magnetischen Spannung $u'_{c,j}$ modelliert wird, wobei an den Enden jedes Astes ein magnetisches Potential $\varphi_n(y)$, $\varphi_n(y+dy)$ anliegt und in einem Ast ein magnetischer Fluss $\Phi_n(y)$ fließt und zwei benachbarte Äste durch eine differentielle Permeanz G', die eine magnetische Kopplung zweier benachbarter Zähne durch einen Zahnzwischenraum modelliert, unter Ausbildung von Knoten des Reluktanznetzwerkes des Stators (RNs) verbunden werden, **dass** das Statorjoch (6) durch lineare Permeanzen $G_{sy}$, die zwei benachbarte Äste des Reluktanznetzwerkes des Stators (RNs) unter Ausbildung von weitern Knoten des Reluktanznetzwerkes des Stators (RNs) verbinden, modelliert wird **und dass** ein Luftspalt (14) am dem Statorjoch (6) gegenüberliegenden Ende des Stators (2) durch Leckagepermanzen $G_{s0}$, die zwei benachbarte Äste des Reluktanznetzwerkes des Stators (RNs) unter Ausbildung von weiteren Knoten des Reluktanznetzwerkes des Stators ($RN_S$) verbinden, und durch einen magnetischen Fluss $\Phi_{\Sigma n}$ im Luftspalt (14) modelliert wird.

14. Verfahren nach Anspruch 13, **dadurch gekennzeichnet, dass** an jedem Knoten des Reluktanznetzwerkes des Stators (RNs) eine Knotensumme der magnetischen Flüsse $\Phi_n(y)$ in den Ästen und des magnetischen Potentials $\varphi_n(y)$, $\varphi_n(y+dy)$ an den Ästen aufgestellt werden, um ein Gleichungssystem als Systemgleichungen des Stators (2) zu erhalten, das den Stator (2) des Linearmotors (1) modelliert.

15. Verfahren nach einem der Ansprüche 12 bis 14, **dadurch gekennzeichnet, dass** die Transporteinheit (3) und ein Luftspalt (14) zwischen Zähnen des Stators (2) und den Antriebsmagneten (9) an der Transporteinheit (3), die durch ein Magnetjoch verbunden sind, mit einem Reluktanznetzwerk des Läufers ($RN_L$) modelliert wird, in dem die p Antriebsmagnete (9) als Äste des Reluktanznetzwerkes des Läufers ($RN_L$) mit einer linearen Permanz $G_m$ und mit einer magnetischen Spannung $u_{msp}$ einer magnetischen Spannungsquelle modelliert werden, wobei die Enden der Äste durch Leckagepermanzen $G_{ml}$ am Luftspalt (14) und linearen Permanzen $G_b$ am Magnetjoch unter Ausbildung von Knoten des Reluktanznetzwerkes des Läufers ($RN_L$) verbunden werden, **dass** an den Knoten am Luftspalt (14) weitere Äste des Reluktanznetzwerkes des Läufers ($RN_L$) anschließen, in denen Luftspaltpermeanzen $G_{a,ij}$ angeordnet sind, wobei jeder der p Antriebsmagnete (9) im Reluktanznetzerk des Läufers ($RN_L$) über jeweils eine Luftspaltpermeanz $G_{a,ij}$ mit jedem der n Zähne im Reluktanznetzwerk des Stators (RNs) verbunden wird und dass die Äste mit den Luftspaltpermeanzen $G_{a,ij}$ jeweils unter Ausbildung von weiteren Knoten des Reluktanznetzwerkes des Läufers ($RN_L$) durch den Stator (2) repräsentierenden Spannungsquellen mit den magnetischen Spannungen $u_s$ verbunden werden.

16. Verfahren nach Anspruch 15, **dadurch gekennzeichnet, dass** aus dem Reluktanznetzwerk des Läufers ($RN_L$) ein Gleichungssystem als Systemgleichungen des Läufers gebildet wird, das den Luftspalt (14) und die Transporteinheit (3) modelliert.

17. Verfahren nach Anspruch 14 und 16, **dadurch gekennzeichnet, dass** aus den aus den Reluktanznetzwerken (RNs), ($RN_L$) gebildeten Systemgleichungen auf die Transporteinheit (3) wirkende Antriebskräfte und/oder Antriebsmomente abgeleitet werden.

18. Linearmotor (1) mit einem Stator (2), an dem eine Mehrzahl von Antriebsspulen (4) angeordnet sind, und mit einer entlang des Stators (2) bewegten Transporteinheit (3), an der eine Mehrzahl von Antriebsmagnete (9) angeordnet sind, wobei aktive Antriebsspulen (4) im Bereich der Antriebsmagnete (9) der Transporteinheit (3) zur Erzeugung eines elektromagnetischen Feld bestromt werden, wobei das elektromagnetische Feld zum Bewegen der Transporteinheit (3) mit den Antriebsmagneten (9) der Transporteinheit (3) zusammenwirkt, wobei eine Regelungseinheit (10) vorgesehen ist, in der ein Gütefunktional J(SG) als Funktion von Stellgrößen (SG) der bestromten aktiven Antriebsspulen (9) implementiert ist, wobei das Gütefunktional J(SG) eine Summe einer Anzahl $k \geq 1$ von mit

Gewichtungsfaktoren $k_k$ gewichteten Gütetermen $JT_k(SG)$, die von den Stellgrößen abhängig sind, enthält, wobei das Gütefunktional J(SG) einen Güteterm $JT_k(SG)$ enthält, der eine Abweichung einer vorgegebenen Bewegungssollgröße (BS) der Regelung der Bewegung der Transporteinheit (3) von einer von der Stellgröße (SG) abhängigen Istgröße (IS) der Regelung bewertet, wobei die Regelungseinheit (10) das Gütefunktional J(SG) zur Regelung der Bewegung der Transporteinheit (3) entlang des Stators (2) hinsichtlich der Stellgrößen (SG) optimiert, um für den jeweiligen Zeitschritt der Regelung der Bewegung optimale Stellgrößen ($SG_{opt}$) zu ermitteln und die Antriebsspulen (9) gemäß den ermittelten optimalen Stellgrößen ($SG_{opt}$) bestromt werden, **dadurch gekennzeichnet, dass** in der Regelungseinheit (10) während der Bewegung der Transporteinheit (3) entlang des Stators (2) zumindest zwei Bewegungsphasen vorgesehen sind, wobei für die zumindest zwei Bewegungsphasen unterschiedliche Gütefunktionale J(SG) für die Ermittlung der optimalen Stellgrößen ($SG_{opt}$) implementiert sind, wobei sich die unterschiedlichen Gütefunktionale J(SG) durch die Anzahl k der verwendeten Güteterme $JT_k(SG)$ und/oder durch die Güteterme $JT_k(SG)$ und/oder durch die Gewichtungsfaktoren $k_k$ unterscheiden.

**Claims**

1. Method for operating a linear motor (1) comprising a stator (2), on which a plurality of drive coils (4) is arranged, and comprising a transport unit (3), which is moved along the stator (2) and on which a plurality of drive magnets (9) is arranged, wherein an electromagnetic field, which interacts with the drive magnets (9) of the transport unit (3) for moving the transport unit (3), is generated by energizing active drive coils (4) in the region of the drive magnets (9) of the transport unit (3), wherein a quality functional J(SG) is used as a function of manipulated variables (SG) of the active drive coils (4), wherein the quality functional J(SG) contains a sum of a number $k \geq 1$ of quality terms $JT_k(SG)$, which are weighted with weighting factors $k_k$ and are dependent on the manipulated variables (SG), wherein the quality functional J(SG) contains a quality term $JT_k(SG)$, which evaluates a deviation of a specified movement setpoint variable (BS) of the control of the movement of the transport unit (3) from an actual variable (IS) of the control which is dependent on the manipulated variable (SG), wherein the quality functional J(SG) is optimized for the control of the movement of the transport unit (3) along the stator (2) with regard to the manipulated variables (SG) in order to determine optimal manipulated variables ($SG_{opt}$) for the relevant time step of the control of the movement, and the active drive coils (9) are energized according to the determined optimal manipulated variables ($SG_{opt}$), **characterized in that** during the movement of the transport unit (3) along the stator (2), at least two movement phases are provided, wherein in the at least two movement phases, different quality functionals J(SG) are used for determining the optimal manipulated variables ($SG_{opt}$), wherein the different quality functionals J(SG) differ by the number k of the quality terms $JT_k(SG)$ used and/or by the quality terms $JT_k(SG)$ and/or by the weighting factors $k_k$.

2. Method according to Claim 1, **characterized in that** the quality functional J(SG) is optimized on-line during the movement of the transport unit (3) in each time step of the control in order to determine the optimal manipulated variables ($SG_{opt}$) in the relevant time step of the control of the movement.

3. Method according to Claim 1, **characterized in that** the quality functional J(SG) is optimized off-line for a specified movement of the transport unit (3) along the stator (2) in order to calculate in advance the optimal manipulated variables ($SG_{opt}$) to be set during the performance of the movement.

4. Method according to Claim 1, **characterized in that** for the different quality functionals J(SG) of the at least two movement phases, movement characteristic maps (12), which map a movement setpoint variable (BS) and a position of the transport unit (3) relative to the active drive coils (4) to optimal manipulated variables ($SG_{opt}$), are created in advance by means of off-line optimization, **and in that** during the performance of the movement of the transport unit (3), the associated optimal manipulated variables ($SG_{opt}$) are read out from a movement characteristic map (12) on the basis of a determined actual position of the transport unit (3) relative to the active drive coils (4) and a specified setpoint value of the movement setpoint variable (BS).

5. Method according to any one of Claims 1 to 4, **characterized in that** the optimal manipulated variables ($SG_{opt}$) are adjusted in a manipulated variable controller.

6. Method according to any one of Claims 1 to 5, **characterized in that** the quality functional J(SG) contains a quality term $JT_k(SG)$ which evaluates the electrical power required for the movement of the transport unit (3).

7. Method according to Claim 6, **characterized in that** as a quality term $JT_k(SG)$, the square of the Euclidean norm of a vector with the manipulated variables (SG) of the energized drive coils (4) is used, i.e., $$JT_k(SG) = k_i \cdot \left\| SG \right\|_2^2.$$

8. Method according to any one of Claims 1 to 5, **characterized in that** the quality functional J(SG) contains a quality term $JT_k(SG)$ of the form $JT_k(SG) = k_e(BS - IS(SG))^2$ or $JT_k(SG) = k_e(BS - IS(SG))$.

9. Method according to any one of Claims 1 to 5, **characterized in that** the quality functional J(SG) contains a quality term $JT_k(SG)$ which evaluates a sum $SG_\Sigma$ of the manipulated variables (SG), preferably as a square of the sum, i.e., $JT_k(SG) = k_\Sigma SG_\Sigma^2$ or $JT_k(SG) = k_\Sigma SG_\Sigma$.

10. Method according to any one of Claims 1 to 9, **characterized in that** a quality term $JT_k(SG)$ contains a variable which is determined using a mathematical model of the linear motor (1).

11. Method according to any one of Claims 1 to 9, **characterized in that** a constraint g(SG) in the form of a mathematical model of the linear motor (1) is taken into account in the optimization.

12. Method according to Claims 10 or 11, **characterized in that** the linear motor (1) is modeled with a reluctance network (RN) as a network with branches, in which reluctances R, permeances G or magnetic voltage sources are arranged and in which magnetic fluxes Φ flow.

13. Method according to Claim 12, **characterized in that** the stator (2) of the linear motor (1) is modeled with a number n of teeth connected by a stator yoke (6), **in that** a differential section dy of each of the number n of teeth is modeled by a branch of the reluctance network of the stator (RNs) with a differential reluctance $R'_a(\Phi_i)$, $R'_c(\Phi_i)$ and, in the case of a drive coil, on one of the number of teeth with a magnetic voltage source with a differential magnetic voltage $u'_{c,j}$, wherein a magnetic potential $\varphi_n(y)$, $\varphi_n(y+dy)$ is applied to the ends of each branch, and a magnetic flux $\Phi_n(y)$ flows in a branch, and two adjacent branches are connected by a differential permeance G', which models a magnetic coupling of two adjacent teeth through a tooth interspace to form nodes of the reluctance network of the stator (RNs), **in that** the stator yoke (6) is modeled by linear permeances $G_{sy}$, which connect two adjacent branches of the reluctance network of the stator ($RN_S$) to form further nodes of the reluctance network of the stator (RNs), **and in that** an air gap (14) at the end of the stator (2) opposite the stator yoke (6) is modeled by leakage permeances $G_{s0}$, which connect two adjacent branches of the reluctance network of the stator ($RN_S$) to form further nodes of the reluctance network of the stator (RNs), and by a magnetic flux $\Phi_{\Sigma n}$ in the air gap (14).

14. Method according to Claim 13, **characterized in that** at each node of the reluctance network of the stator (RNs), a node sum of the magnetic fluxes $\Phi_n(y)$ in the branches and of the magnetic potential $\varphi_n(y)$, $\varphi_n(y+dy)$ on the branches is formulated in order to obtain, as system equations of the stator (2), an equation system that models the stator (2) of the linear motor (1).

15. Method according to any one of Claims 12 to 14, **characterized in that** the transport unit (3) and an air gap (14) between teeth of the stator (2) and the drive magnets (9) on the transport unit (3), which are connected by a magnet yoke, are modeled with a reluctance network of the rotor ($RN_L$), in which the p drive magnets (9) are modeled as branches of the reluctance network of the rotor ($RN_L$) with a linear permeance $G_m$ and with a magnetic voltage $u_{msp}$ of a magnetic voltage source, wherein the ends of the branches are connected by leakage permeances $G_{ml}$ at the air gap (14) and linear permeances $G_b$ at the magnet yoke to form nodes of the reluctance network of the rotor ($RN_L$), **in that** the nodes at the air gap (14) are linked to further branches of the reluctance network of the rotor ($RN_L$), in which air gap permeances $G_{a,ij}$ are arranged, wherein each of the p drive magnets (9) in the reluctance network of the rotor ($RN_L$) is connected via a respective air gap permeance $G_{a,ij}$ to each of the n teeth in the reluctance network of the stator ($RN_s$), **and in that** the branches with the air gap permeances $G_{a,ij}$ are connected by voltage sources representing the stator (2) to the magnetic voltages $u_s$ to respectively form further nodes of the reluctance network of the rotor ($RN_L$).

16. Method according to Claim 15, **characterized in that** from the reluctance network of the rotor ($RN_L$), an equation system which models the air gap (14) and the transport unit (3) is formed as system equations of the rotor.

17. Method according to Claims 14 and 16, **characterized in that** from the system equations formed from the reluctance networks (RNs), ($RN_L$), driving forces and/or driving torques acting on the transport unit (3) are derived.

**18.** Linear motor (1) comprising a stator (2), on which a plurality of drive coils (4) is arranged, and comprising a transport unit (3), which is moved along the stator (2) and on which a plurality of drive magnets (9) is arranged, wherein active drive coils (4) in the region of the drive magnets (9) of the transport unit (3) are energized in order to generate an electromagnetic field, wherein the electromagnetic field interacts with the drive magnets (9) of the transport unit (3) for moving the transport unit (3), wherein a control unit (10) is provided, in which a quality functional J(SG) is implemented as a function of manipulated variables (SG) of the energized active drive coils (9), wherein the quality functional J(SG) contains a sum of a number $k \geq 1$ of quality terms $JT_k(SG)$, which are weighted with weighting factors $k_k$ and are dependent on the manipulated variables (SG), wherein the quality functional J(SG) contains a quality term $JT_k(SG)$, which evaluates a deviation of a specified movement setpoint variable (BS) of the control of the movement of the transport unit (3) from an actual variable (IS) of the control which is dependent on the manipulated variable (SG), wherein the control unit (10) optimizes the quality functional J(SG) for the control of the movement of the transport unit (3) along the stator (2) with regard to the manipulated variables (SG) in order to determine optimal manipulated variables ($SG_{opt}$) for the relevant time step of the control of the movement, and the drive coils (9) are energized according to the determined optimal manipulated variables ($SG_{opt}$), **characterized in that** during the movement of the transport unit (3) along the stator (2), at least two movement phases are provided in the control unit (10), wherein different quality functionals J(SG) for determining the optimal manipulated variables ($SG_{opt}$) are implemented for the at least two movement phases, wherein the different quality functionals J(SG) differ by the number k of the quality terms $JT_k(SG)$ used and/or by the quality terms $JT_k(SG)$ and/or by the weighting factors $k_k$.

**Revendications**

**1.** Procédé permettant de faire fonctionner un moteur linéaire (1), comprenant un stator (2) sur lequel est disposée une pluralité de bobines d'entraînement (4), et une unité de transport (3) déplacée le long du stator (2) et sur laquelle est disposée une pluralité d'aimants d'entraînement (9), dans lequel l'alimentation en courant de bobines d'entraînement (4) actives dans la zone des aimants d'entraînement (9) de l'unité de transport (3) produit un champ électromagnétique qui coopère avec les aimants d'entraînement (9) de l'unité de transport (3) pour déplacer l'unité de transport (3), dans lequel une fonction de qualité J(SG) est utilisée comme fonction des grandeurs de réglage (SG) des bobines d'entraînement (4) actives, dans lequel la fonction de qualité J(SG) comporte une somme d'un nombre $k \geq 1$ de termes de qualité $JT_k(SG)$ pondérés avec des facteurs de pondération $k_k$ et qui dépendent des grandeurs de réglage, dans lequel la fonction de qualité J(SG) comporte un terme de qualité $JT_k(SG)$ qui évalue un écart d'une grandeur théorique de mouvement (BS) prédéfinie de la régulation du mouvement de l'unité de transport (3) par rapport à une grandeur réelle (IS) de la régulation, dépendant de la grandeur de réglage (SG), dans lequel la fonction de qualité J(SG) est optimisée concernant les grandeurs de réglage (SG) pour réguler le mouvement de l'unité de transport (3) le long du stator (2) afin d'établir pour l'étape temporelle respective de la régulation du mouvement des grandeurs de réglage ($SG_{opt}$) optimales, et les bobines d'entraînement (9) actives sont alimentées en courant selon les grandeurs de réglage optimales ($SG_{opt}$) établies, **caractérisé en ce que** pendant le mouvement de l'unité de transport (3) le long du stator (2), au moins deux phases de mouvement sont prévues, dans lequel, dans lesdites au moins deux phases de mouvement, différentes fonctions de qualité J(SG) sont utilisées pour l'établissement des grandeurs de réglage optimales ($SG_{opt}$), dans lequel les différentes fonctions de qualité J(SG) se distinguent par le nombre k des termes de qualité utilisés $JT_k(SG)$ et/ou par les termes de qualité $JT_k(SG)$ et/ou par les facteurs de pondération de qualité $k_k$.

**2.** Procédé selon la revendication 1, **caractérisé en ce que** la fonction de qualité J(SG) est optimisée en ligne pendant le mouvement de l'unité de transport (3) à chaque étape temporelle de la régulation pour établir à l'étape temporelle respective de la régulation du mouvement des grandeurs de réglage optimales ($SG_{opt}$).

**3.** Procédé selon la revendication 1, **caractérisé en ce que** la fonction de qualité J(SG) est optimisée hors ligne pour un mouvement prédéfini de l'unité de transport (3) le long du stator (2) afin de calculer préalablement les grandeurs de réglage ($SG_{opt}$) à régler pendant l'exécution du mouvement.

**4.** Procédé selon la revendication 1, **caractérisé en ce que** pour les différentes fonctions de qualité J(SG) des au moins deux phases de mouvement, des diagrammes caractéristiques de mouvement (12) sont créés préalablement par optimisation hors ligne et mappent une grandeur théorique de mouvement (BS) et une position de l'unité de transport (3) par rapport aux bobines d'entraînement (4) actives sur des grandeurs de réglage optimales ($SG_{opt}$), et **en ce que** pendant l'exécution du mouvement de l'unité de transport (3), à partir d'un diagramme caractéristique de mouvement (12), à l'aide d'une position réelle établie de l'unité de transport (3) par rapport aux bobines d'entraînement (4) et d'une valeur théorique prédéfinie de la grandeur théorique de mouvement (BS), les grandeurs de

réglage optimales (SG$_{opt}$) associées sont lues.

**5.** Procédé selon l'une quelconque des revendications 1 à 4, **caractérisé en ce que** les grandeurs de réglage optimales (SG$_{opt}$) sont réglées dans un régulateur de grandeur de réglage.

**6.** Procédé selon l'une quelconque des revendications 1 à 5, **caractérisé en ce que** la fonction de qualité J(SG) comporte un terme de qualité JT$_k$(SG) qui évalue la puissance électrique nécessaire au mouvement de l'unité de transport (3).

**7.** Procédé selon la revendication 6, **caractérisé en ce qu'**en tant que terme de qualité JT$_k$(SG) on utilise le carré de la norme euclidienne d'un vecteur avec les grandeurs de réglage (SG) des bobines d'entraînement (4) alimentées en courant, à savoir $JT_k(SG) = k_i \cdot \|SG\|_2^2$ .

**8.** Procédé selon l'une quelconque des revendications 1 à 5, **caractérisé en ce que** la fonction de qualité J(SG) comporte un terme de qualité JT$_k$(SG) sous la forme $JT_k(SG) = k_e (BS - IS(SG))^2$ ou $JT_k(SG) = k_e (BS - IS(SG))$.

**9.** Procédé selon l'une quelconque des revendications 1 à 5, **caractérisé en ce que** la fonction de qualité J(SG) comporte un terme de qualité JT$_k$(SG) qui évalue une somme SG$_\Sigma$ des grandeurs de réglage (SG), de préférence sous la forme du carré de la somme, à savoir $JT_k(SG) = k_\Sigma SG_\Sigma^2$ ou $JT_k(SG) = k_\Sigma SG_\Sigma$.

**10.** Procédé selon l'une quelconque des revendications 1 à 9, **caractérisé en ce qu'**un terme de qualité JT$_k$(SG) comporte une variable qui est établie à l'aide d'un modèle mathématique du moteur linéaire (1).

**11.** Procédé selon l'une quelconque des revendications 1 à 9, **caractérisé en ce que** lors de l'optimisation, une condition secondaire g(SG) sous la forme d'un modèle mathématique du moteur linéaire (1) est prise en compte.

**12.** Procédé selon la revendication 10 ou 11, **caractérisé en ce que** le moteur linéaire (1) est modélisé avec un réseau de reluctance (RN) comme un réseau à branches dans lesquelles des reluctances R, des perméances G ou des sources de tension magnétiques sont disposées et dans lesquelles circulent des flux magnétiques Φ.

**13.** Procédé selon la revendication 12, **caractérisé en ce que** le stator (2) du moteur linéaire (1) est modélisé avec un nombre de dents qui sont reliées par une culasse statorique (6), **en ce qu'**une section différentielle dy de chacune du nombre de dents est modélisée par une branche du réseau de réluctance du stator (RN$_s$) avec une reluctance différentielle $R'_a(\Phi_i)$, $R'_c(\Phi_i)$, et dans le cas d'une bobine d'entraînement sur l'une du nombre de dents avec une source de tension magnétique avec une tension magnétique différentielle $u'_{c,j}$, dans lequel aux extrémités de chaque branche, un potentiel magnétique $\varphi_n(y)$, $\varphi_n(y+dy)$ est appliqué, et dans chaque branche circule un flux magnétique $\Phi_n(y)$, et deux branches voisines sont reliées par une perméance différentielle G' qui modélise un couplage magnétique de deux dents voisines par un espace interdentaire en réalisant des noeuds du réseau de reluctance du stator (RN$_s$), **en ce que** la culasse statorique (6) est modélisée par des perméances linéaires G$_{sy}$ qui relient deux branches voisines du réseau de reluctance du stator (RN$_s$) en réalisant d'autres noeuds du réseau de reluctance du stator (RN$_s$) , et **en ce qu'**un entrefer (14) à l'extrémité du stator (2) opposée à la culasse statorique (6) est modélisé par des perméances de fuite G$_{s0}$ qui relient deux branches voisines du réseau de reluctance du stator (RN$_s$) en réalisant d'autres noeuds du réseau de reluctance du stator (RN$_s$) et par un flux magnétique $\Phi_{\Sigma n}$ dans l'entrefer (14) .

**14.** Procédé selon la revendication 13, **caractérisé en ce qu'**à chaque noeud du réseau de reluctance du stator (RN$_s$), une somme de noeuds des flux magnétiques $\Phi_n(y)$ dans les branches et du potentiel magnétique $\varphi_n(y)$, $\varphi_n(y+dy)$ au niveau des branches est créée pour obtenir un système d'équations sous forme d'équations de système du stator (2) qui modélise le stator (2) du moteur linéaire (1).

**15.** Procédé selon l'une quelconque des revendications 12 à 14, **caractérisé en ce que** l'unité de transport (3) et un entrefer (14) entre les dents du stator (2) et les aimants d'entraînement (9) sur l'unité de transport (3) qui sont reliés par une culasse magnétique sont modélisés par un réseau de reluctance du rotor (RN$_L$) dans lequel les p aimants d'entraînement (9) sont modélisés sous forme de branches du réseau de reluctance du rotor (RN$_L$) avec une perméance G$_m$ linéaire et une tension magnétique u$_{msp}$ d'une source de tension magnétique, dans lequel les extrémités des branches sont reliées par des perméances de fuite G$_{ml}$ au niveau de l'entrefer (14) et des perméances linéaires $G_b$ au niveau de la culasse magnétique en réalisant des noeuds du réseau de reluctance du rotor ($RN_L$), **en ce qu'**au niveau des noeuds, l'entrefer (14) est suivi d'autres branches du réseau de reluctance du rotor ($RN_L$) dans lesquelles des perméances d'entrefer $G_{a,ij}$ sont disposées, dans lequel chacun des p aimants d'entraînement (9) dans le réseau de reluctance du rotor ($RN_L$) est relié respectivement par une perméance d'entrefer $G_{a,ij}$ à chacune des dents dans le réseau de reluctance du stator ($RN_s$), et **en ce que** les branches sont reliées aux perméances d'entrefer $G_{a,ij}$, respectivement en réalisant d'autres noeuds du réseau de reluctance du rotor ($RN_L$), par des sources de tension représentant le stator (2) avec les tensions magnétiques $u_s$.

16. Procédé selon la revendication 15, **caractérisé en ce qu'**à partir du réseau de reluctance du rotor ($RN_L$), un système d'équations est formé sous forme d'équations de système du rotor qui modélise l'entrefer (14) et l'unité de transport (3).

17. Procédé selon les revendications 14 et 16, **caractérisé en ce qu'**à partir des équations de système formées à partir des réseaux de reluctance ($RN_s$), ($RN_L$), des forces d'entraînement et/ou des couples d'entraînement agissant sur l'unité de transport (3) sont dérivés.

18. Moteur linéaire (1), comprenant un stator (2) sur lequel est disposée une pluralité de bobines d'entraînement (4), et une unité de transport (3) déplacée le long du stator (2) et sur laquelle est disposée une pluralité d'aimants d'entraînement (9), dans lequel des bobines d'entraînement (4) actives dans la zone des aimants d'entraînement (9) de l'unité de transport (3) sont alimentées en courant pour produire un champ électromagnétique, dans lequel le champ électromagnétique coopère avec les aimants d'entraînement (9) de l'unité de transport (3) pour déplacer l'unité de transport (3), dans lequel une unité de régulation (10) est prévue dans laquelle une fonction de qualité $J(SG)$ est mise en oeuvre comme une fonction de grandeurs de réglage ($SG$) des bobines d'entraînement actives (9) alimentées en courant, dans lequel la fonction de qualité $J(SG)$ comporte une somme d'un nombre $k \geq 1$ de termes de qualité $JT_k(SG)$ pondérés avec des facteurs de pondération $k_k$ et qui dépendent des grandeurs de réglage, dans lequel la fonction de qualité $J(SG)$ comporte un terme de qualité $JT_k(SG)$ qui évalue un écart d'une grandeur théorique de mouvement ($BS$) prédéfinie de la régulation du mouvement de l'unité de transport (3) par rapport à une grandeur réelle ($IS$) de la régulation, dépendant de la grandeur de réglage ($SG$), dans lequel l'unité de régulation (10) optimise la fonction de qualité $J(SG)$ concernant les grandeurs de réglage ($SG$) pour réguler le mouvement de l'unité de transport (3) le long du stator (2) afin d'établir pour l'étape temporelle respective de la régulation du mouvement des grandeurs de réglage optimales ($SG_{opt}$) , et les bobines d'entraînement (9) sont alimentées en courant selon les grandeurs de réglage optimales ($SG_{opt}$) établies, **caractérisé en ce que** dans l'unité de régulation (10) pendant le mouvement de l'unité de transport (3) le long du stator (2), au moins deux phases de mouvement sont prévues, dans lequel, pour les au moins deux phases de mouvement, différentes fonctions de qualité $J(SG)$ sont mises en oeuvre pour l'établissement des grandeurs de réglage optimales ($SG_{opt}$), dans lequel les différentes fonctions de qualité $J(SG)$ se distinguent par le nombre $k$ des termes de qualité utilisés $JT_k(SG)$ et/ou par les termes de qualité $JT_k(SG)$ et/ou par les facteurs de pondération de qualité $k_k$.

Fig. 1

Fig. 2

EP 4 208 941 B1

Fig. 3

Fig. 4

Fig. 5

## Fig. 6

## Fig. 9

Fig. 7

Fig. 8

EP 4 208 941 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2013143783 A1
- US 6876107 B2
- US 20130074724 A1
- WO 2004103792 A1
- US 9202719 B2
- EP 3385110 A1
- EP 3109998 B1
- EP 3422558 A1
- EP 3251986 A1
- US 8344669 B1
- EP 3249803 A1

### In der Beschreibung aufgeführte Nicht-Patentliteratur

- **KHONG, P. C. et al.** Magnetic Guidance of the Mover in a Long-Primary Linear Motor. *IEEE Transactions on Industry Applications,* Mai 2011, vol. 47 (3), 1319-1327
- **DENG, Z., et al.** Forces and Parameters of Permanent Magnet Linear Synchronous Machines. *IEEE Transaction of Magnetics,* Januar 1987, vol. MAG-23 (1
- **BOLDEA, I. et al.** Linear Electric Actuators and Generators. Cambrige University Press, 1997